# EUROPEAN PATENT SPECIFICATION

(11) **EP 1 494 431 B1**
(45) Date of publication and mention of the grant of the patent: **09.12.2009**
(21) Application number: 03715723.7
(22) Date of filing: 02.04.2003
(51) Int. Cl.: H04L 29/08, H04L 29/06

(54) **INFORMATION DISTRIBUTION SYSTEM AND METHOD, INFORMATION TRANSMISSION APPARATUS AND METHOD, INFORMATION RECEPTION APPARATUS AND METHOD, RECORDING MEDIUM, AND PROGRAM**
INFORMATIONSVERTEILUNGSSYSTEM UND VERFAHREN, INFORMATIONSSENDEVORRICHTUNG UND VERFAHREN, INFORMATIONSEMPFANGSVORRICHTUNG UND VERFAHREN, AUFZEICHNUNGSMEDIUM UND PROGRAMM
SYSTEME ET PROCEDE DE DISTRIBUTION D'INFORMATIONS, APPAREIL ET PROCEDE DE TRANSMISSION D'INFORMATIONS, APPAREIL ET PROCEDE DE RECEPTION D'INFORMATIONS, SUPPORT D'ENREGISTREMENT ET PROGRAMME

(30) Priority: 05.04.2002 JP 2002103787
(43) Date of publication of application: 05.01.2005
(73) Proprietor: Sony Corporation, Tokyo 141-0001 (JP)
(72) Inventor: KIRIYAMA, Tetsuaki, c/o Sony Corporation, Tokyo 141-0001 (JP)
(74) Representative: Horner, David Richard
(86) International application number: PCT/JP2003/004207
(87) International publication number: WO 2003/085935

(56) References cited:
- WO-A-01/11915
- JP-A- 01 295 357
- JP-A- 10 228 364
- JP-A- 11 284 659
- JP-A- 11 284 659
- JP-A- 2002 051 056
- US-A- 5 459 455
- US-A- 5 799 206
- DATABASE WPI Week 199844 Thomson Scientific, London, GB; AN 1998-516546 XP002501932 -& JP 10 228364 A (CANON KK) 25 August 1998 (1998-08-25)

## Description

### Technical Field

The present invention relates to information distribution systems, and in particular to an information distribution system that can reliably distribute an image transmitted from each of two or more transmission apparatuses to a reception apparatus even in a limited band.

### Background Art

Nowadays, information distribution systems for distributing a large volume of information, such as image signals, from transmission apparatuses to reception apparatuses via communication lines are becoming widely used.

In a typical known information distribution system, however, image signals are generally distributed from one transmission apparatus to one reception apparatus, and signals (including not only image signals but also, for example, control signals) are transmitted unidirectionally from a transmission apparatus to a reception apparatus. Furthermore, once a transmission apparatus starts the distribution of an image signal, the distribution of the image signals continues regardless of the state of the line between the transmission apparatus and the reception apparatus or the state of the transmission destination (reception apparatus).

Thus, there is a first problem in that the transmission apparatus has difficulty in monitoring the reception state (e.g., whether or not an error has occurred) at the reception apparatus.

Furthermore, when two or more transmission apparatuses simultaneously distribute image signals to one reception apparatus via a line with a limited line capacity, an overflow of image signals may occur due to the band limit of the line (image signals from two or more transmission apparatuses may overflow on the line, and cannot be transmitted). Any processing at the reception apparatus is not satisfactory in preventing the occurrence of this overflow of image signals, and hence processing at the transmission apparatus is required.

In addition to the above-described first problem, because the reception apparatus cannot control the transmission apparatus, there is a second problem in that the transmission apparatus has difficulty in taking a preventive measure against the occurrence of image signal overflow.

WO 01/11915 discloses a method and device for selective data transfer in a digital transfer system. US 5,459,455 discloses a method and apparatus for data communication between transmission terminal and reception terminal of a network system. US 5,799,206 discloses a remote print system having a plurality of computes which are capable of monitoring and controlling operations of a remote printer. Database WPI Week 199844 Thomson Scientific, London, GB; AN 1998-516546 discloses a data forwarding apparatus.

### Disclosure of Invention

In view of the problems described above, the present invention enables images transmitted from each of two or more transmission apparatuses to be reliably distributed to a reception apparatus, even in a limited band.

Particular and preferred aspects of the present invention are set out in the appended claims.

An information distribution system according to one embodiment of the present invention is **characterized in that** an information transmission apparatus generates first control information for making a request to an information reception apparatus for transmission of a result of a determination as to whether or not the information reception apparatus can receive main information and transmits the generated first control information via a network; the information reception apparatus, when receiving the first control information transmitted from the information transmission apparatus via the network, determines whether or not to receive the main information transmitted from the information transmission apparatus that has transmitted the received first control information and generates second control information indicating a result of the determination to transmit the generated second control information to the information transmission apparatus via the network; and the information transmission apparatus receives the second control information transmitted from the information reception apparatus via the network, and prohibits the transmission of the main information to the information reception apparatus if the received second control information indicates a determination result that the main information is not received or transmits the main information to the information reception apparatus via the network if the second control information indicates a determination result that the main information is received.

An information distribution method of an information distribution system according to one embodiment of the present invention is characterized by including a first transmission step of generating, in an information transmission apparatus, first control information for making a request to an information reception apparatus for transmission of a result of a determination as to whether or not the information reception apparatus can receive main information and transmitting the generated first control information via a network; a second transmission step of determining whether or not the main information transmitted from the information transmission apparatus that has transmitted the first control information is received when the information reception apparatus receives via the network the first control information transmitted from the information transmission apparatus by the processing in the first transmission step, and generating second control information indicating a result of the determination to transmit the generated second control information to the information transmission apparatus via the network; and a transmission control step of receiving in the information transmission apparatus via the network the second control information transmitted from the information reception apparatus by the processing in the second transmission step, and prohibiting the transmission of the main information to the information reception apparatus if the received second control information indicates a determination result that the main information is not received or permitting the main information to be transmitted to the information reception apparatus via the network if the second control information indicates a determination result that the main information is received.

In the information distribution system and method according to one embodiment of the present invention where an information transmission apparatus for transmitting main information and an information reception apparatus for receiving the main information are interconnected via a network, first control information for making a request to the information reception apparatus for transmission of a result of a determination as to whether or not the information reception apparatus can receive the main information is generated by the information transmission apparatus and transmitted via the network; a determination is made as to whether or not the main information transmitted from the information transmission apparatus that has transmitted the first control information is received as a response to the first control information when the information reception apparatus receives the first control information, and second control information indicating a result of the determination is generated and transmitted to the information transmission apparatus via the network; and the second control information is received by the information transmission apparatus via the network. The transmission of the main information to the information reception apparatus is prohibited by the information transmission apparatus if the second control information indicates a determination result that the main information is not received or the main information is transmitted to the information reception apparatus via the network if the second control information indicates a determination result that the main information is received.

The information distribution system according to one embodiment of the present invention can be any system where an information transmission apparatus transmits information to an information reception apparatus via a network. Each of the information transmission apparatus and the information reception apparatus included in the information distribution system may transmit and receive information to and from another apparatus with or without a network. In other words, each of the information transmission apparatus and the information reception apparatus of the information distribution system according to one embodiment of the present invention may be an apparatus that can perform either or both of transmission and reception of information.

An information transmission apparatus according to one embodiment of the present invention is characterized by including generation means for generating first control information for making a request to an information reception apparatus interconnected via a network for transmission of a result of a determination as to whether or not the information reception apparatus can receive main information; transmission means for transmitting the first control information generated by the generation means to the information reception apparatus via the network; reception means for receiving, via the network, second control information transmitted from the information reception apparatus as a response to the first control information transmitted by the transmission means, the second control information indicating a result of a determination as to whether or not the information reception apparatus receives the main information; and transmission control means for prohibiting the transmission means from transmitting the main information to the information reception apparatus if the second control information received by the reception means indicates a determination result that the information reception apparatus does not receive the main information or permitting the transmission means to transmit the main information to the information reception apparatus via the network if the second control information indicates a determination result that the information reception apparatus receives the main information.

An information transmission method of an information transmission apparatus according to one embodiment of the present invention is characterized by including a generation step of generating first control information for making a request to an information reception apparatus interconnected via a network for transmission of a result of a determination as to whether or not the information reception apparatus can receive main information; a transmission step of transmitting the first control information generated by the processing in the generation step to the information reception apparatus via the network; a reception step of receiving, via the network, second control information transmitted from the information reception apparatus as a response to the first control information transmitted by the processing in the transmission step, the second control information indicating a result of a determination as to whether or not the information reception apparatus receives the main information; and a transmission control step of prohibiting the main information from being transmitted to the information reception apparatus if the second control information received by the processing in the reception step indicates a determination result that the information reception apparatus does not receive the main information or permitting the main information to be transmitted to the information reception apparatus via the network if the second control information indicates a determination result that the information reception apparatus receives the main information.

A program on a first recording medium according to one embodiment of the present invention is characterized by including a generation step of generating first control information for making a request to an information reception apparatus interconnected via a network for transmission of a result of a determination as to whether or not the information reception apparatus can receive main information; a transmission step of transmitting the first control information generated by the processing in the generation step to the information reception apparatus via the network; a reception step of receiving, via the network, second control information transmitted from the information reception apparatus as a response to the first control information transmitted by the processing in the transmission step, the second control information indicating a result of a determination as to whether or not the information reception apparatus receives the main information; and a transmission control step of prohibiting the main information from being transmitted to the information reception apparatus if the second control information received by the processing in the reception step indicates a determination result that the information reception apparatus does not receive the main information or permitting the main information to be transmitted to the information reception apparatus via the network if the second control information indicates a determination result that the information reception apparatus receives the main information.

A first program according to one embodiment of the present invention is characterized by enabling a computer to execute a generation step of generating first control information for making a request to an information reception apparatus interconnected via a network for transmission of a result of a determination as to whether or not the information reception apparatus can receive main information; a transmission step of transmitting the first control information generated by the processing in the generation step to the information reception apparatus via the network; a reception step of receiving, via the network, second control information transmitted from the information reception apparatus as a response to the first control information transmitted by the processing in the transmission step, the second control information indicating a result of a determination as to whether or not the information reception apparatus receives the main information; and a transmission control step of prohibiting the main information from being transmitted to the information reception apparatus if the second control information received by the processing in the reception step indicates a determination result that the information reception apparatus does not receive the main information or permitting the main information to be transmitted to the information reception apparatus via the network if the second control information indicates a determination result that the information reception apparatus receives the main information.

According to the information transmission apparatus, method, recording medium, and program of embodiments of the present invention, first control information for making a request to an information reception apparatus interconnected via a network for transmission of a result of a determination as to whether or not the information reception apparatus can receive main information is generated; the first control information is transmitted to the information reception apparatus via the network; and, as a response to the transmitted first control information, second control information transmitted from the information reception apparatus is received via the network, the second control information indicating a result of a determination as to whether or not the information reception apparatus receives the main information. The main information is prohibited from being transmitted to the information reception apparatus if the received second control information indicates a determination result that the information reception apparatus does not receive the main information or the main information is permitted to be transmitted to the information reception apparatus via the network if the second control information indicates a determination result that the information reception apparatus receives the main information.

The information transmission apparatus according to one embodiment of the present invention can be any apparatus that transmits information to an information reception apparatus connected via a network. The information transmission apparatus may transmit and receive information to and from another apparatus with or without a network. In other words, the information transmission apparatus according to one embodiment of the present invention may be an apparatus that can perform only transmission or both of transmission and reception of information.

An information reception apparatus according to one embodiment of the present invention is characterized by including reception means for receiving via a network first control information transmitted from an information transmission apparatus interconnected via the network, the first control information making a request for transmission of a result of a determination as to whether or not main information can be received; generation means for determining whether or not the main information transmitted from the information transmission apparatus that has transmitted the first control information is received when the first control information is received by the reception means and generating second control information indicating a result of the determination; and transmission means for transmitting the second control information generated by the generation means to the information transmission apparatus via the network.

An information reception method of an information reception apparatus according to one embodiment of the present invention is characterized by including a reception step of receiving via a network first control information transmitted from an information transmission apparatus interconnected via the network, the first control information making a request for transmission of a result of a determination as to whether or not main information can be received; a generation step of determining whether or not the main information transmitted from the information transmission apparatus that has transmitted the first control information is received when the first control information is received by the processing in the reception step and generating second control information indicating a result of the determination; and a transmission step of transmitting the second control information generated by the processing in the generation step to the information transmission apparatus via the network.

A program on a second recording medium according to one embodiment of the present invention is characterized by including a reception step of receiving via a network first control information transmitted from an information transmission apparatus interconnected via the network, the first control information making a request for transmission of a result of a determination as to whether or not main information can be received; a generation step of determining whether or not the main information transmitted from the information transmission apparatus that has transmitted the first control information is received when the first control information is received by the processing in the reception step and generating second control information indicating a result of the determination; and a transmission step of transmitting the second control information generated by the processing in the generation step to the information transmission apparatus via the network.

A second program according to one embodiment of the present invention is characterized by enabling a computer to execute a reception step of receiving via a network first control information transmitted from an information transmission apparatus interconnected via the network, the first control information making a request for transmission of a result of a determination as to whether or not main information can be received; a generation step of determining whether or not the main information transmitted from the information transmission apparatus that has transmitted the first control information is received when the first control information is received by the processing in the reception step and generating second control information indicating a result of the determination; and a transmission step of transmitting the second control information generated by the processing in the generation step to the information transmission apparatus via the network.

According to the information reception apparatus, method, second recording medium, and second program of embodiments of the present invention, when first control information transmitted from an information transmission apparatus interconnected via a network, i.e., the first control information making a request for transmission of a result of a determination as to whether or not main information can be received, is received via the network, a determination is made as to whether or not the main information transmitted from the information transmission apparatus that has transmitted the first control information is received as a response to the received first control information, and second control information indicating a result of the determination is generated and transmitted to the information transmission apparatus via the network.

The information reception apparatus according to one embodiment of the present invention can be any apparatus that receives information from an information transmission apparatus connected via a network. The information reception apparatus may transmit and receive information to and from another apparatus with or without a network. In other words, the information reception apparatus according to one embodiment of the present invention may be an apparatus that can perform only reception or both of transmission and reception of information.

### Brief Description of the Drawings

Fig. 1 is a block diagram showing an example structure of an information distribution system to which the present invention is applied.
Fig. 2 is a block diagram showing an example structure of a transmission apparatus of the information distribution system in Fig. 1.
Fig. 3 is a block diagram showing an example structure of a reception apparatus of the information distribution system in Fig. 1.
Fig. 4 is a diagram showing a state transition of the transmission apparatus in Fig. 2.
Fig. 5 is a diagram showing a state transition of the reception apparatus in Fig. 3.
Fig. 6 is a time chart illustrating the operation of the information distribution system in Fig. 1.
Fig. 7 is a block diagram showing another example structure of a transmission apparatus or a reception apparatus of an information distribution system to which the present invention is applied.

### Best Mode for Carrying Out the Invention

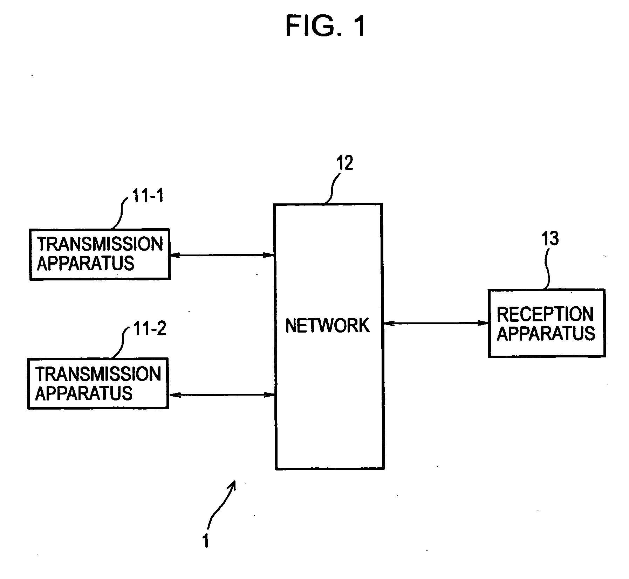

Fig. 1 shows an example structure of an information distribution system to which the present invention is applied.

In an information distribution system 1, any number of transmission apparatuses (two transmission apparatuses in the example of Fig. 1, i.e., a transmission apparatus 11-1 and a transmission apparatus 11-2) and one reception apparatus 13 are interconnected via a network 12.

It is assumed that Ethernet® is used for the network 12 in this example, although any type of network is applicable for the network 12.

The transmission apparatus 11-1 transmits (distributes) main information to the reception apparatus 13 via the network 12.

Although the main information distributed to the reception apparatus 13 is not limited to a particular type in this example, it is assumed that image signals and audio signals (e.g., image signals and audio signals in compliance with MPEG (Moving Picture Experts Group) data) are transmitted to the reception apparatus 13. Although the following description focuses on an image signal only as the main information (as the main distributed information) to make the description understood easily, the corresponding audio signal can also be transmitted along with the image signal.

Furthermore, a method for distributing the main information (image signal in this example) to the reception apparatus 13 is not limited to a particular type, though this example assumes that the main information is transmitted in RTP (Real-time Transport Protocol) packets. In short, the main information is distributed to the reception apparatus 13 in RTP packets. Thus, hereinafter, the main information distributed to the reception apparatus 13 is referred to as the RTP, as required.

The transmission apparatus 11-1 transmits, along with an image signal (RTP), a first control signal to the reception apparatus 13 via the network 12, i.e., the first control signal which makes a request for a result of determination as to whether or not the RTP can be received (whether or not the RTP should be received).

When the reception apparatus 13 receives the first control signal transmitted by the transmission apparatus 11-1 via the network 12, the reception apparatus 13 determines whether or not the RTP transmitted by the information transmission apparatus 11-1 should be received, and generates a second control signal indicating the determination result to transmit it to the transmission apparatus 11-1 via the network 12.

Although these first and second control signals are not limited to a particular type, this example assumes that the first and second control signals are RTCP (RTP (Real-time Transport Protocol) Control Protocol) packets.

A method where the RTCP specified in RFC (Request For Comments) 1889 of IETF (Internet Engineering Task Force) is used is known as a method for monitoring the traffic state of a network.

In this method, the transmitter transmits so-called a "transmission report", i.e., packets (RTCP packets) of information such as the number of transmitted RTPs and a timestamp to the receiver at regular intervals. On the other hand, based on this "transmission report", the receiver returns, to the transmitter, so-called a "reception report", i.e., packets (RTCP packets) of information including, for example, the rate of RTP loss, the number of missing RTPs, the received maximum sequence number, and the arrival interval jitter.

As described above, the RTCP is a protocol between the transmitter and the receiver, and moreover, functions as a protocol regardless of the type of the network connecting the transmitter and the receiver, i.e., regardless of whether the network is a LAN (Local Area Network), a WAN (Wide Area Network), or another type.

What corresponds to this "transmission report (RTCP packet)" is the above-described first control signal in this example, and what corresponds to the "reception report (RTCP packet)" is the above-described second control signal.

Hereinafter, this first control signal is referred to as the RTCP, and the second control signal is referred to as the RTCP RR, as required.

The transmission apparatus 11-1 receives the RTCP RR transmitted by the reception apparatus 13 via the network 12.

If the received RTCP RR is information indicating a determination result such that the RTP will not be accepted (hereinafter, this information is referred to as the RTCP RR (rejection)), the transmission apparatus 11-1 is prohibited from transmitting the RTP to the reception apparatus 13. In contrast, when the received RTCP RR is information indicating a determination result such that the RTP will be accepted (hereinafter, this information is referred to as the RTCP RR (acceptance)), the transmission apparatus 11-1 transmits the RTP to the reception apparatus 13 via the network 12.

Now, suppose that the transmission apparatus 11-1 has received the RTCP RR (acceptance). In this case, as described above, the transmission apparatus 11-1 distributes the RTP to the reception apparatus 13 via the network 12.

When the transmission apparatus 11-2 is to distribute (transmit) the RTP to the reception apparatus 13 in this situation, the transmission apparatus 11-2 transmits the RTCP, along with the RTP, to the reception apparatus 13 via the network 12, as with the transmission apparatus 11-1.

When the reception apparatus 13 receives the RTCP transmitted from the transmission apparatus 11-2 via the network 12, the reception apparatus 13 generates the RTCP RR as a response to the RTCP from the transmission apparatus 11-2, as described above, and transmits it to the transmission apparatus 11-2 via the network 12. More specifically, since the reception apparatus 13 has already received the RTP distributed from the transmission apparatus 11-1, the reception apparatus 13 determines that it cannot accept the RTP distributed from the transmission apparatus 11-2, and generates the RTCP RR (rejection) to transmit it to the transmission apparatus 11-2 via the network 12.

When the transmission apparatus 11-2 receives this RTCP RR (rejection) via the network 12, the transmission apparatus 11-2 stops the subsequent distribution of the RTP to the reception apparatus 13.

It is noted, however, that even though the transmission apparatus 11-2 stops the distribution of the RTP to the reception apparatus 13, the transmission apparatus 11-2 still repeats the processing of transmitting the RTCP to the reception apparatus 13 via the network 12 at predetermined time intervals.

As a result, for example, if the transmission apparatus 11-1 stops the distribution of the RTP to the reception apparatus 13 for some reason, the reception apparatus 13 does not receive the RTP from the transmission apparatus 11-1. Therefore, the reception apparatus 13 generates the RTCP RR (acceptance), as a response to the RTCP that has been subsequently received from the transmission apparatus 11-2, and transmits it to the transmission apparatus 11-2 via the network 12.

When the transmission apparatus 11-2 receives this RTCP RR (acceptance) via the network 12, the transmission apparatus 11-2 resumes the distribution of the RTP to the reception apparatus 13, and transmits the RTP to the reception apparatus 13 via the network 12.

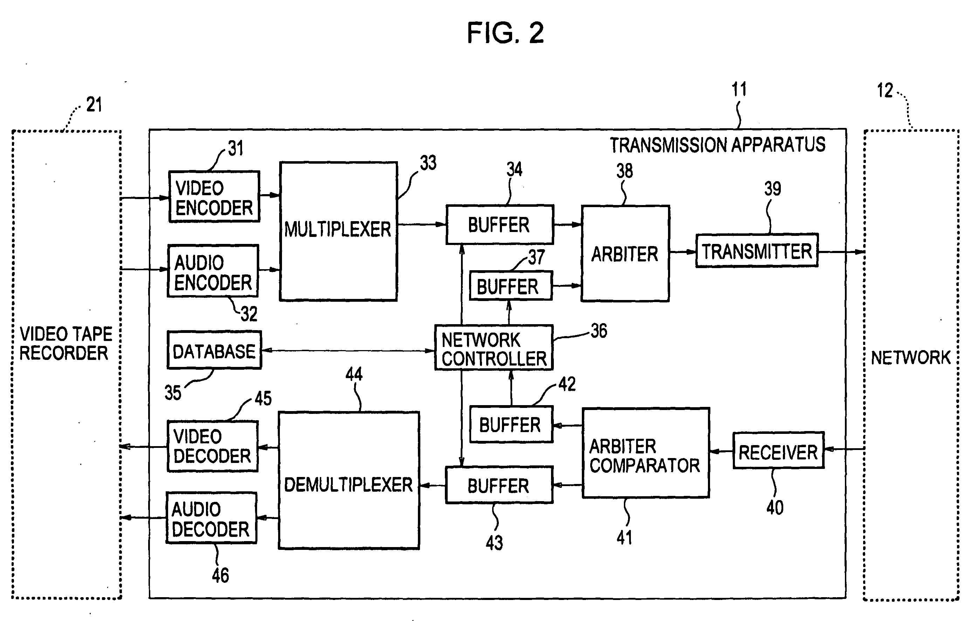

An example structure of the transmission apparatus 11-1 and the transmission apparatus 11-2 will now be described with reference to Fig. 2. Hereinafter, when it is not necessary to discriminate between the transmission apparatus 11-1 and the transmission apparatus 11-2, they are referred to just as the transmission apparatus 11.

In the example of Fig. 2, in addition to the above-described network 12, a video tape recorder 21, which supplies the transmission apparatus 11 with an image signal, is connected to the transmission apparatus 11. As a device which is connected to the transmission apparatus 11, any type of device that can provide main information is acceptable. For example, a hard disk drive or a monitor can be connected, instead of the video tape recorder 21 in Fig. 2.

The transmission apparatus 11 includes a video encoder 31 which compresses and encodes a video signal input from the video tape recorder 21; an audio encoder 32 which compresses and encodes an audio signal input from the video tape recorder 21; and a multiplexer 33 which multiplexes the video signal encoded by the video encoder 31 and the audio signal encoded by the audio encoder 32.

The transmission apparatus 11 further includes a buffer 34 for storing RTP packets of a multiplexed signal supplied from the multiplexer 33 (storing the above-described RTP (image signal)); a database 35 for storing information such as the address of the distribution destination; a network controller 36 for generating the above-described RTCP (the first control signal) based on the information stored in the database 35, supplying the RTCP to the buffer 37, and controlling the output of the RTP stored in the buffer 34 to an arbiter 38; the arbiter 38 for multiplexing the RTP supplied from the buffer 34 and the RTCP supplied from the buffer 37; and a transmitter 39 for transmitting to the network 12 a signal (multiplexed signal of the RTP and the RTCP or the RTCP) supplied from the arbiter 38.

If the video tape recorder 21 has functions corresponding to the video encoder 31, the audio encoder 32, and the multiplexer 33, then the video encoder 31, the audio encoder 32, and the multiplexer 33 can be omitted.

The transmission apparatus 11 further includes a receiver 40 for receiving via the network 12 the RTP RR (the above-described second control signal) transmitted by the reception apparatus 13 (Fig. 1); and a buffer 42 for acquiring and storing the RTCP RR received by the receiver 40 via an arbiter comparator 41.

The network controller 36 detects the RTCP RR stored in the buffer 42, and, as described above, if the RTCP RR is the RTCP RR (rejection), the RTP stored in the buffer 34 is prohibited from being supplied to the arbiter 38. In this case, the RTP is not distributed to the reception apparatus 13 (Fig. 1) via the network 12, but the RTCP only is transmitted to the reception apparatus 13 via the network 12 at predetermined time intervals.

In contrast, if the RTCP RR acquired from the buffer 42 is the RTCP RR (acceptance), the network controller 36 permits the RTP stored in the buffer 34 to be supplied to the arbiter 38. In this case, the RTP is multiplexed with the RTCP by the arbiter 38 and distributed to the reception apparatus 13 (Fig. 1) via the transmitter 39 and the network 12. Thus, only the RTCP is transmitted to the reception apparatus 13 via the network 12 at predetermined time intervals.

As described above, in the transmission apparatus 11, the network controller 36 included in the transmission apparatus 11 controls whether or not to transmit the RTP (image signal) to the reception apparatus 13 based on the RTCP RR from the reception apparatus 13. Therefore, even when image signal packets are transferred in a limited band shared by another transmission apparatus on the network 12, there is no possibility of one of the image signal packets being discarded. Consequently, the image corresponding to the RTP received by the reception apparatus 13 can be prevented from deteriorating. Furthermore, the reception state at the reception apparatus 13 can be detected.

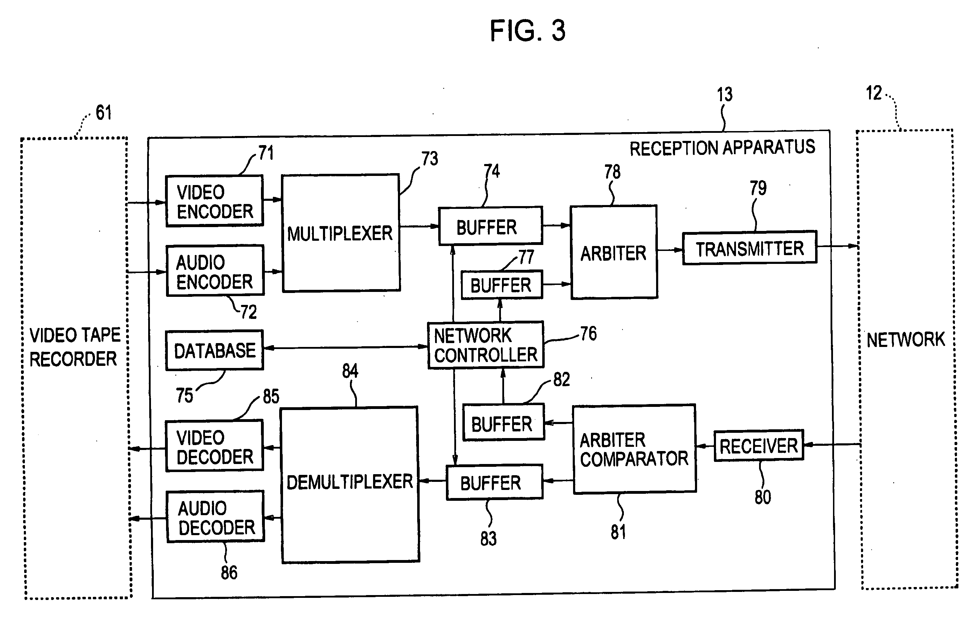

In the example of Fig. 2, the transmission apparatus 11 further includes blocks of the arbiter comparator 41, a buffer 43, a demultiplexer 44, a video decoder 45, and an audio decoder 46. These blocks, as described below, are utilized when the transmission apparatus 11 also functions as a reception apparatus. More specifically, these blocks can be omitted when the transmission apparatus 11 (also serves as a reception function) functions only as a transmission apparatus, and therefore, the description of these blocks are omitted (to be described below as a description of the corresponding block in the reception apparatus 13 in Fig. 3).

Fig. 3 shows an example structure of the reception apparatus 13.

In the example of Fig. 3, in addition to the above-described network 12, a video tape recorder 61 that records an image signal output from the reception apparatus 13 is connected to the reception apparatus 13. As a device which is connected to the reception apparatus 13, any type of device that can acquire and handle the main information is acceptable. For example, a hard disk drive or a monitor can be connected, instead of the video tape recorder 61 in Fig. 3.

Each of the components from the video encoder 71 to the receiver 80 in the reception apparatus 13 has the same structure as that of the corresponding component from the video encoder 31 to the receiver 40 in the transmission apparatus 11 of Fig. 2.

In short, the transmission apparatus 11 and the reception apparatus 13 can include the same components. In other words, the transmission apparatus 11 can have the function of the reception apparatus 13, and similarly, the reception apparatus 13 can have the function of the transmission apparatus 11.

The receiver 80 receives a signal (a multiplexed signal of the RTP (image signal) and the RTCP (the first control signal) or the RTCP) transmitted from the transmission apparatus 11 via the network 12.

If the signal supplied from the receiver 80 is a multiplexed signal, the arbiter comparator 81 separates the multiplexed signal into the RTP and the RTCP, supplies the buffer 83 with the RTP, and supplies the buffer 82 with the RTCP. Furthermore, when the signal supplied from the receiver 80 is the RTCP, the arbiter comparator 81 supplies the buffer 82 with the RTCP as-is.

The database 75 records information about a transmitter whose output is accepted by the reception apparatus 13 (the transmission apparatus 11-1 or the transmission apparatus 11-2 in the example of Fig. 1) (hereinafter, referred to as reception acceptance information).

When the RTCP is stored in the buffer 82, the network controller 76 compares the RTCP with the reception acceptance information stored in the database 75, generates the RTCP RR (the RTCP RR (acceptance) or the RTCP RR (rejection)) as a signal for responding to the RTCP, i.e., as the above-described second control signal, based on the comparison result, and supplies it to the buffer 77. The RTCP RR supplied to the buffer 77 is transmitted to the network 12 via the arbiter 78 and the transmitter 79, and transmitted to the corresponding transmission apparatus 11 via the network 12.

The demultiplexer 84 separates the RTP stored in the buffer 83 into the video signal and the audio signal, supplies the video decoder 85 with the video signal, and supplies the audio decoder 86 with the audio signal.

The video decoder 85 decodes the compressed and encoded video signal supplied by the demultiplexer 84 and supplies it to the video tape recorder 61.

The audio decoder 86 decodes the compressed and encoded audio signal supplied by the demultiplexer 84, and supplies it to the video tape recorder 61.

If the video tape recorder 61 has the functions corresponding to the video decoder 85, the audio decoder 86, and the demultiplexer 84, then the video decoder 85, the audio decoder 86, and the demultiplexer 84 can be omitted.

Furthermore, the blocks the video encoder 71, the audio encoder 72, the multiplexer 73, and the buffer 74 can be omitted when the reception apparatus 13 functions only as a reception apparatus. Therefore, the description of these blocks is omitted because the corresponding blocks in Fig. 2 (the video encoder 31, the audio encoder 32, the multiplexer 33, and the buffer 34) have already been described.

As described above, in the reception apparatus 13, the network controller 76 included in the reception apparatus 13 determines whether or not to receive, as a response to the RTCP (image signal) from the transmission apparatus 11, the RTP (image signal) from the transmission apparatus 11 that has transmitted the RTCP and generates the RTCP RR indicating the determination result to transmit it to the transmission apparatus 11. Therefore, even when image signal packets are transferred in a limited band shared by two or more transmission apparatuses 11 on the network 12, there is no possibility of one of the image signal packets being discarded. Consequently, the image corresponding to the RTP received by the reception apparatus 13 can be prevented from deteriorating. Furthermore, image signals from two or more transmission apparatuses (the transmission apparatus 11-1 and the transmission apparatus 11-2 in the example of Fig. 1) can be acquired.

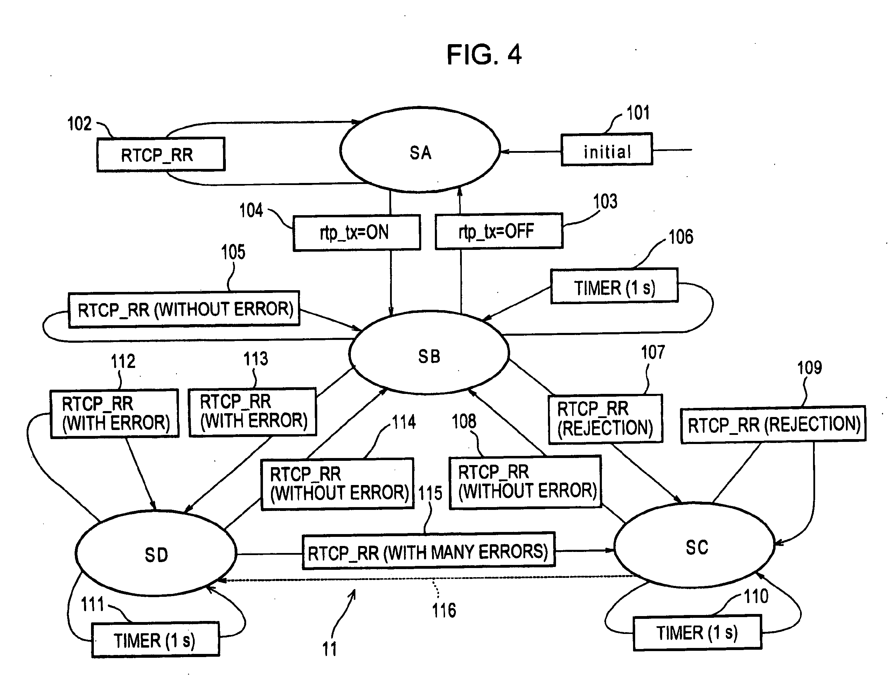

An example of the state of the transmission apparatus 11 (Fig. 2) will now be described with reference to Fig. 4.

In this example, as shown in Fig. 4, the state of the transmission apparatus 11 is one of the states SA to SD.

The state SA indicates that the transmission apparatus 11 does not transmit a signal, i.e., that the transmission apparatus 11 does not transmit the RTP (image signal) or the RTCP (the first control signal).

In contrast, the state SB to state SD indicate states where the transmission apparatus 11 transmits a signal, i.e., the above-described multiplexed signal of the RTP and the RTCP or the RTCP.

The state SB indicates that the RTP (the RTP included in the multiplexed signal of the RTP and the RTCP) transmitted from the transmission apparatus 11 is being normally received by the reception apparatus 13 via the network 12. When the state of the transmission apparatus 11 is the state SB, the transmission apparatus 11 transmits the multiplexed signal of the RTP and the RTCP, and periodically transmits the RTCP. In this example, for example, the RTP is transmitted at a rate of 10,000 packets/second, and furthermore, the RTCP is periodically transmitted once every five seconds.

The state SC indicates that the transmission apparatus 11 cannot distribute the RTP (a multiplexed signal of the RTP and the RTCP) to the reception apparatus 13, which is the distribution destination of the RTP. It is noted, however, that the transmission apparatus 11, even in the state SC, periodically transmits the RTCP in the same manner as in the state SB.

The state SD indicates that an error with a predetermined level or higher, such as a packet error, has occurred in the RTP (RTP included in the multiplexed signal of the RTP and the RTCP) transmitted from the transmission apparatus 11 and received by the reception apparatus 13 via the network 12. It is noted, however, that the transmission apparatus 11, even in the state SD, transmits a multiplexed signal of the RTP and RTCP and periodically transmits the RTCP in the same manner as in the state SB.

In short, when the state of the transmission apparatus 11 changes from the state SA to the state SB, the network controller 36 (Fig. 2) starts to generate the RTCP and starts to control whether or not to supply the arbiter 38 with the RTP stored in the buffer 34.

When the state of the transmission apparatus 11 changes to the state SB or the state SD, the network controller 36 permits the RTP stored in the buffer 34 to be supplied to the arbiter 38. More specifically, the arbiter 38 multiplexes the RTP stored in the buffer 34 and the RTCP stored in the buffer 37 to supply it to the transmitter 39, which then distributes the supplied multiplexed signal of the RTP and the RTCP to the reception apparatus 13 via the network 12.

In contrast, when the state of the transmission apparatus 11 changes to the state SC, the network controller 36 stops supplying the arbiter 38 with the RTP stored in the buffer 34. In short, the transmitter 39 stops the distribution (transmission) of the RTP to the reception apparatus 13 via the network 12.

Even if the state of the transmission apparatus 11 is one of the states SB to SD, the network controller 36 generates the RTCP, and continues to transmit it to the reception apparatus 13 periodically (e.g., at a rate of once/5 seconds) via the buffer 37, the arbiter 38, the transmitter 39, and, the network 12.

As described above, the network controller 36 changes the state of the transmission apparatus 11 to one of the states SA to SD, and according to the resultant state, controls the transmission of the RTP and RTCP.

A state transition from one of the states SA to SD to one of the states SA to SD (including a case where the same state is continued) is carried out when a state transition condition is satisfied.

In Fig. 4, the above-described state transition conditions are shown in rectangular blocks drawn on arrows, each representing a transition from one state (any of the states SA to SD) to one state (any of the states SA to SD), with numbers 101 to 116.

When, for example, the "initial" command is input (the input device is not shown), the network controller 36 determines that the state transition condition 101 has been satisfied, and initializes the state of the transmission apparatus 11 to the state SA.

When the RTCP RR received by the receiver 40 (the second control signal transmitted by the reception apparatus 13 via the network 12) is supplied via the arbiter comparator 41 and the buffer 42 while the transmission apparatus 11 is in the state SA (if the RTCP RR that cannot be supplied is supplied), the network controller 36 determines that the state transition condition 102 has been satisfied, and changes the state of the transmission apparatus 11 from the state SA to the state SA (no state transition is made).

When, for example, the "rtp_tx=ON" command (command for directing the start of transmission processing of an image signal) is input while the transmission apparatus 11 is in the state SA, the network controller 36 determines that the state transition condition 104 has been satisfied, and changes the state of the transmission apparatus 11 from the state SA to the state SB.

In this case (when the state of the transmission apparatus 11 is changed to the state SB), as described above, the network controller 36 first transmits the multiplexed signal of the RTP and the RTCP via the transmitter 39 and the network 12, and as long as the transmission apparatus 11 remains in the state SB, the network controller 36 transmits the multiplexed signal of the RTP and the RTCP or the RTCP via the transmitter 39 and the network 12.

Subsequently, when, for example, the "rtp_tx=OFF" command (command for directing the termination of transmission processing of an image signal) is input while the transmission apparatus 11 remains in the state SB, the network controller 36 determines that the state transition condition 103 has been satisfied, changes the state of the transmission apparatus 11 from the state SB to the state SA, and stops the transmission of the multiplexed signal of the RTP and the RTCP and the RTCP.

As described above, when the reception apparatus 13 (Fig. 1) receives via the network 12 the RTCP transmitted by the transmission apparatus 11, the reception apparatus 13 generates the RTCP RR (the second control signal) as a response to the RTCP and transmits it to the transmission apparatus 11 via the network 12.

This RTCP RR is the RTCP RR (rejection) or the RTCP RR (acceptance) in the above-described example. In this case, the reception apparatus 13 measures the reception state of the RTP for the transmission apparatus 11 the RTP from which is determined as acceptable, and according to the measurement result, generates the RTCP RR indicating a state where a normal signal is being received (hereinafter, referred to as the RTCP RR (without error)) or the RTCP RR indicating a state where an error, such as packet error, has occurred in the received signal (hereinafter, referred to as the RTCP RR (with error)).

In other words, in this case, the reception apparatus 13 generates the RTCP RR (without error) or the RTCP RR (with error) included in the RTCP RR (acceptance) or generates the RTCP RR (rejection), and then transmits it to the transmission apparatus 11 via the network 12.

If, for example, the reception apparatus 13 transmits the RTCP RR (without error), the receiver 40 receives it via the network 12, and supplies it to the network controller 36 via the arbiter comparator 41 and the buffer 42. When the network controller 36 in the state SB acquires this RTCP RR (without error), it determines that the state transition condition 105 has been satisfied, and changes the state of the transmission apparatus 11 from the state SB to the state SB (no state transition is made).

Furthermore, if, for example, the reception apparatus 13 transmits the RTCP RR (with error), the receiver 40 receives it via the network 12, and supplies it to the network controller 36 via the arbiter comparator 41 and the buffer 42. When the network controller 36 in the state SB acquires this RTCP RR (with error), it determines that the state transition condition 113 has been satisfied, and changes the state of the transmission apparatus 11 from the state SB to the state SD.

In these cases (when the state of the transmission apparatus 11 remains in the state SB or is changed to the state SD), the network controller 36 continues to transmit the multiplexed signal of the RTP and the RTCP or the RTCP to the transmitter 39 via the network 12.

In contrast, for example, when the reception apparatus 13 transmits the RTCP RR (rejection), the receiver 40 receives it via the network 12, and then supplies it to the network controller 36 via the arbiter comparator 41 and the buffer 42. When the network controller 36 in the state SB acquires this RTCP RR (rejection), it determines that the state transition condition 107 has been satisfied, and changes the state of the transmission apparatus 11 from the state SB to the state SC.

In this case (when the state of the transmission apparatus 11 is changed to the state SC), the network controller 36, as described above, stops the distribution (transmission) of the RTP (the multiplexed signal of the RTP and the RTCP) to the reception apparatus 13 via the network 12. It is noted, however, that the RTCP is continuously transmitted to the reception apparatus 13 via the network 12 at regular intervals.

As described above, the state SB indicates that the RTCP RR (without error) is transmitted from the reception apparatus 13 (the reception state at the reception apparatus 13 is normal), the state SD indicates that the RTCP RR (with error) is transmitted from the reception apparatus 13 (an error has occurred in the RTP received by the reception apparatus 13), and the state SC indicates that the RTCP RR (rejection) is transmitted from the reception apparatus 13 (the reception of the RTP is rejected by the reception apparatus 13).

When the network controller 36 acquires the RTCP RR, it changes the state of the transmission apparatus 11 to the state corresponding to the type of the acquired RTCP RR, i.e., the state SB corresponding to the RTCP RR (without error), the state SD corresponding to the RTCP RR (with error), or the state SC corresponding to the RTCP RR (rejection).

Thus, with the transmission apparatus 11 in the state SD, the network controller 36 determines that the state transition condition 112 has been satisfied when it acquires the RTCP RR (with error), and changes the state of the transmission apparatus 11 from the state SD to the state SD (no transition is made). In contrast, when the network controller 36 acquires the RTCP RR (without error), it determines that the state transition condition 114 has been satisfied and changes the state of the transmission apparatus 11 from the state SD to the state SB, or when the network controller 36 acquires the RTCP RR (rejection), it determines that the state transition condition 115 has been satisfied and changes the state of the transmission apparatus 11 from the state SD to the state SC.

Similarly, with the transmission apparatus 11 in the state SC, the network controller 36 determines that the state transition condition 109 has been satisfied when it acquires the RTCP RR (rejection), and changes the state of the transmission apparatus 11 from the state SC to the state SC (no transition is made). In contrast, when the network controller 36 acquires the RTCP RR (without error), it determines that the state transition condition 108 has been satisfied, and changes the state of the transmission apparatus 11 from the state SC to the state SB.

In this example, after the reception apparatus 13 has transmitted the RTCP RR (rejection), the reception apparatus 13 does not transmit the RTCP RR (with error) to the transmission apparatus 11 that is the transmission destination of the RTCP RR (rejection). Hence, the transition from the state SC to the state SD, as indicated by the arrow 116, does not exist.

Furthermore, when the state of the transmission apparatus 11 is one of the states SB to SD, the network controller 36 performs clocking with a timer (not shown in the figure). When, for example, "1 s" is clocked, the network controller 36 determines that the corresponding state transition condition 106, the state transition condition 110, or the state transition condition 111 has been satisfied to change the state of the transmission apparatus 11 to the same state (no state transition is made). Because of this, if the RTCP RR is not transmitted from the reception apparatus 13 after a predetermined period of time (after a predetermined time has been clocked), the network controller 36 can presume that there is a problem, such as a failure of the network 12, or that the reception apparatus 13 is missing.

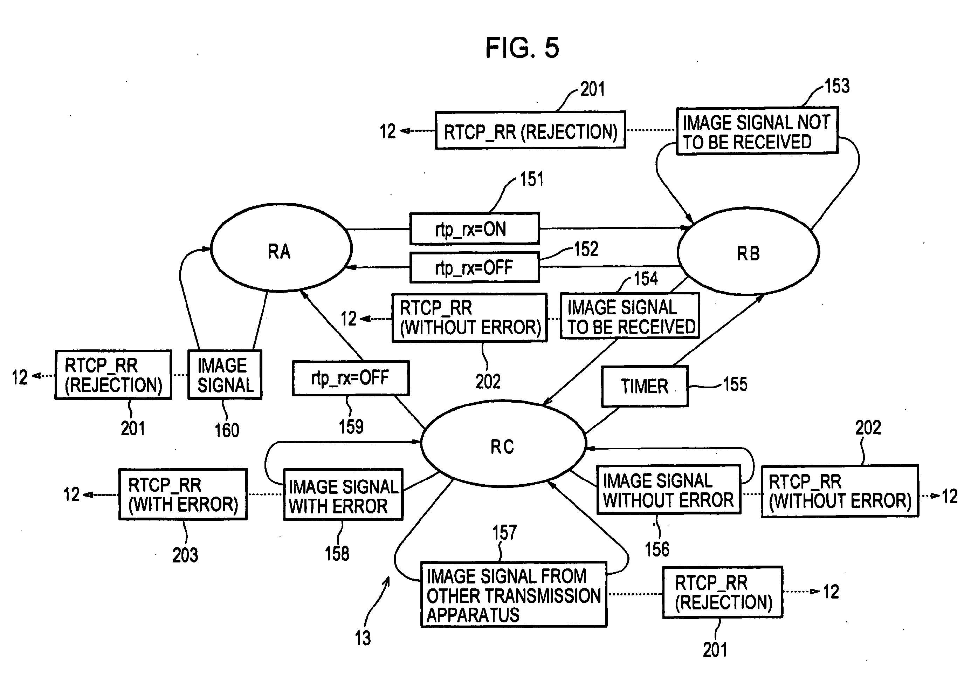

An example of the state of the reception apparatus 13 (Fig. 3) will now be described with reference to Fig. 5

In this example, as shown in Fig. 5, the state of the reception apparatus 13 is one of the states RA to RC.

The state RA indicates that the reception apparatus 13 is in the OFF state, i.e., that the reception apparatus 13 does not receive (rejects to receive) the RTP (image signal) from any of the transmission apparatuses (the transmission apparatus 11-1 and the transmission apparatus 11-2 in the example of Fig. 1).

The state RB indicates that the reception apparatus 13 is in an idle state, i.e., that the reception apparatus 13 has not yet received, but is ready for receiving, the RTP from one of the transmission apparatuses 11-1 and 11-2 connected to the network 12.

The state RC indicates that the reception apparatus 13 is receiving the RTP from one of the transmission apparatuses 11-1 and 11-2 connected to the network 12.

The network controller 76 (Fig. 3) of the reception apparatus 13 changes the state of the reception apparatus 13 to one of the states RA to RC and controls the reception of the RTP according to the resultant state.

A state transition from one of the states RA to RC to one of the states RA to RC (including a case where the same state is continued) is carried out when a state transition condition is satisfied.

In Fig. 5, the above-described state transition conditions are shown in rectangular blocks drawn on arrows, each representing a transition from one state (any of the states RA to RC) to one state (any of the states RA to RC), with numbers 151 to 160.

When, for example, the "rtp_rx=ON" command (the command for starting information reception processing) is input (the input device not shown) while the reception apparatus 13 is in the state RA, the network controller 76 determines that the state transition condition 151 has been satisfied, and changes the state of the reception apparatus 13 from the state RA to the state RB.

When, for example, the "rtp_rx=OFF" command (command for stopping information reception processing) is input while the reception apparatus 13 is in the state RB, the network controller 76 determines that the state transition condition 152 has been satisfied, and changes the state of the reception apparatus 13 from the state RB to the state RA.

When the state of the reception apparatus 13 is changed from the state RA to the state RB, as described above, the receiver 80 receives a multiplexed signal of the RTP (image signal) and the RTCP (the first control signal) or the RTCP transmitted from the transmission apparatus 11 via the network 12. When the signal received by the receiver 80 is a multiplexed signal, the arbiter comparator 81 separates the RTCP from the RTP, and supplies the RTCP to the buffer 82. If the signal received by the receiver 80 is the RTCP, the arbiter comparator 81 supplies the RTCP as-is to the buffer 82.

The network controller 76 acquires the RTCP stored in the buffer 82, compares the RTCP with the reception acceptance information stored in the database 75, and determines whether or not to reject to receive the RTP from the transmission apparatus 11 that has transmitted the RTCP.

When the network controller 76 determines that the RTP from the transmission apparatus 11 that has transmitted the RTCP should not be received, it determines that the state transition condition 153 has been satisfied, generates the RTCP RR (rejection) 201 functioning as the second control signal, and transmits it to the transmission apparatus 11 that has transmitted the RTCP via the buffer 77, the arbiter 78, the transmitter 79, and the network 12. The network controller 76 then changes the state of the reception apparatus 13 from the state RB to the state RB (no state transition is made).

In contrast, when the network controller 76 determines that the RTP from the transmission apparatus 11 that has transmitted the RTCP should be received, it determines that the state transition condition 154 has been satisfied, generates the RTCP RR (without error) 202, and transmits it to the transmission apparatus 11 that has transmitted the RTCP via the buffer 77, the arbiter 78, the transmitter 79, and the network 12. The network controller 76 then changes the state of the reception apparatus 13 from the state RB to the RC.

If, for example, the RTCP RR (without error) 202 is transmitted to the transmission apparatus 11-1 and the state of the reception apparatus 13 is changed from the state RB to the state RC, the transmission apparatus 11-1, as described above, transmits a multiplexed signal of the RTP and the RTCP or the RTCP to the reception apparatus 13 via the network 12.

In this case, as described above, the receiver 80 receives the multiplexed signal or the RTCP and supplies it to the arbiter comparator 81. If the supplied signal is a multiplexed signal, the arbiter comparator 81 separates the multiplexed signal into the RTP and the RTCP, stores the RTCP in the buffer 82, and stores the RTP in the buffer 83. Furthermore, when the supplied signal is the RTCP, the arbiter comparator 81 stores the RTCP as-is in the buffer 82.

As described above, the demultiplexer 84 separates the RTP stored in the buffer 83 into the video signal and the audio signal. The demultiplexer 84 then has the video decoder 85 decode the video signal, which is then supplied to the video tape recorder 61. Furthermore, the demultiplexer 84 has the audio decoder 86 decode the audio signal, which is then supplied to the video tape recorder 61.

The network controller 76 measures an error in the RTP stored in the buffer 83. When the RTP is normal (the error is at a predetermined level or lower), the network controller 76 determines that the state transition condition 156 has been satisfied, generates the RTCP RR (without error) 202, and transmits it to the transmission apparatus 11 that has transmitted the RTCP via the buffer 77, the arbiter 78, the transmitter 79, and the network 12. The network controller 76 then changes the state of the reception apparatus 13 from the state RC to the state RC (no state transition is made).

In contrast, if the measured error is above a predetermined level, the network controller 76 determines that the state transition condition 158 has been satisfied, generates the RTCP RR (with error) 203, and transmits it to the transmission apparatus 11 that has transmitted the RTCP via the buffer 77, the arbiter 78, the transmitter 79, and the network 12. The network controller 76 then changes the state of the reception apparatus 13 from the state RC to the state RC (no state transition is made).

In this state (state RC where the reception apparatus 13 is receiving the RTP from the transmission apparatus 11-1), when the RTCP or the multiplexed signal of the RTP and the RTCP from another transmission apparatus 11-2 is transmitted to the reception apparatus 13 via the network 12, the network controller 76 acquires the RTCP in the signal transmitted by the transmission apparatus 11-2 via the receiver 80, the arbiter comparator 81, and the buffer 82. However, since the reception apparatus 13 in the state RC where the RTP from the transmission apparatus 11-1 is being received, the reception apparatus 13 determines that it cannot receive the RTP from the transmission apparatuses 11-2.

Thus, the network controller 76 determines that the state transition condition 157 has been satisfied, generates the RTCP RR (rejection) 201, and transmits it to the transmission apparatus 11-2 via the buffer 77, the arbiter 78, the transmitter 79, and the network 12. Furthermore, the network controller 76 changes the state of the reception apparatus 13 from the state RC to the state RC (no state transition is made).

When the transmission apparatus 11-2, as described above, receives the RTCP RR (rejection) 201 transmitted by the receiver 80 via the network 12, the transmission apparatus 11-2 stops the distribution of the RTP (the multiplexed signal of the RTP and the RTCP) to the reception apparatus 13. It is noted, however, that the transmission apparatus 11-2 still periodically transmits the RTCP to the reception apparatus 13 via the network 12.

Furthermore, when the state of the reception apparatus 13 is the state RC, the network controller 76 performs clocking with a timer (not shown in the figure). In this case, if the multiplexed signal of the RTP and the RTCP or the RTCP is not transmitted from the transmission apparatus 11-1 after a predetermined period of time (e.g., "30 s" in this example) is clocked, the network controller 36 determines that the state transition condition 155 has been satisfied to change the state of the reception apparatus 13 from the state RC to the state RB.

As a result, the reception apparatus 13 can receive the RTP from the transmission apparatus 11-2. Subsequently, when the reception apparatus 13 receives the RTCP from the transmission apparatus 11-2, it determines that the above-described state transition condition 154 has been satisfied, generates the RTCP RR (without error) 202 for the transmission apparatus 11-2, and transmits it via the network 12. The state of the reception apparatus 13 is then changed from the state RB to the state RC, and subsequently, the transmission apparatus 11-2 transmits the multiplexed signal of the RTP and the RTCP or the RTCP to the reception apparatus 13 via the network 12.

Furthermore, even if the state of the reception apparatus 13 is the state RC, the network controller 76 determines that the state transition condition 159 has been satisfied when, for example, the "rtp_rx=OFF" command is input, as in the state RB, and changes the state of the reception apparatus 13 from the state RC to the state RA.

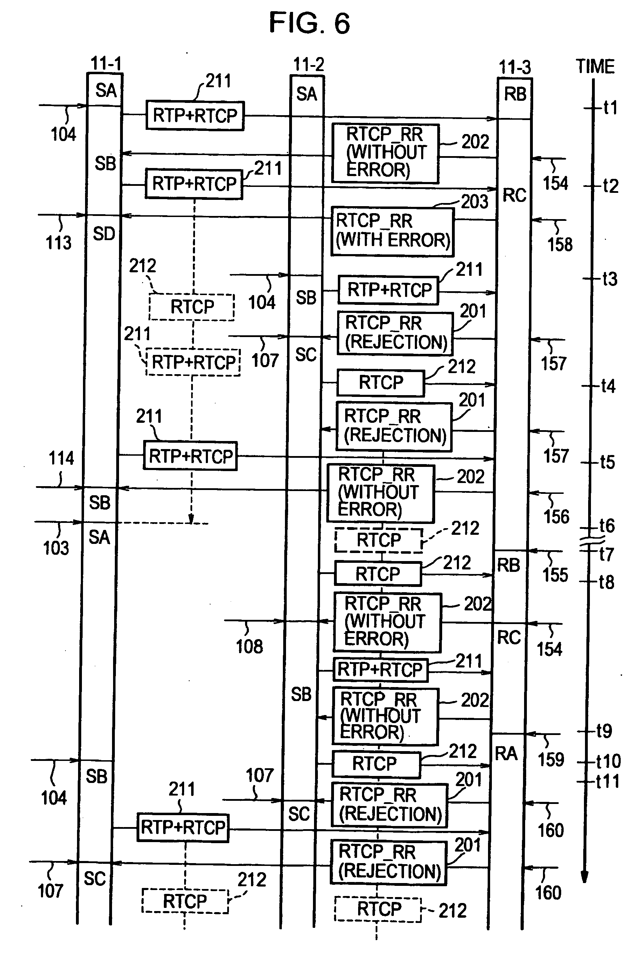

An example of the overall operation of the information distribution system 1 in Fig. 1 will now be described with reference to Fig. 6.

It is assumed that when, for example, the state of each of the transmission apparatus 11-1 and the transmission apparatus 11-2 is the state SA (Fig. 4) and the state of the reception apparatus 13 is the state RB (Fig. 5), the state transition condition 104 of the transmission apparatus 11-1 (Fig. 4) is satisfied (the command "rtp_tx=ON" is input).

At a time t1 immediately after the state transition condition 104 has been satisfied, the transmission apparatus 11-1 transmits a multiplexed signal 211 of the RTP (image signal) and the RTCP (the first control signal) (hereinafter, this multiplexed signal is referred to as the RTP+RTCP) to the reception apparatus 13 via the network 12.

At this time, the reception apparatus 13 receives the RTP+RTCP 211, determines that, for example, the state transition condition 154 (Fig. 5) has been satisfied, generates the RTCP RR (without error) 202 as the second control information in response to the RTCP (RTCP included in the RTP+RTCP 211) from the transmission apparatus 11-1, and transmits it to the transmission apparatus 11-1 via the network 12.

When the state transition condition 104 is satisfied, each of the transmission apparatus 11-1 and the transmission apparatus 11-2 may transmit the RTCP only. In this example, however, in order to make it possible to distribute an image signal to a reception apparatus (not shown in the figure) other than the reception apparatus 13, the RTP+RTCP 211 is first transmitted, as described above.

When the transmission apparatus 11-1 receives via the network 12 the RTCP RR (without error) 202 transmitted from the reception apparatus 13, the transmission apparatus 11-1 subsequently transmits the RTP+RTCP 211 or the RTCP 212 to the reception apparatus 13 via the network 12 to the reception apparatus 13.

When the reception apparatus 13 receives the RTP+RTCP 211, it measures the error in the received RTP (RTP included in the RTP+RTCP 211). When the measured error is at a predetermined level or lower, the reception apparatus 13 determines that the transition estimation condition 156 (Fig. 5) has been satisfied, generates the RTCP RR (without error), and transmits it to the transmission apparatus 11-1 via the network 12.

In contrast, if the measurement result as to the error in the RTP included in the RTP+RTCP 211 received, for example, at a time t2 is above a predetermined level, the reception apparatus 13 determines that the transition estimation condition 158 (Fig. 5) has been satisfied, generates the RTCP RR (with error) 203, and transmits it to the transmission apparatus 11-1 via the network 12.

When the transmission apparatus 11-1 receives the RTCP RR (with error) 203, it determines that the state transition condition 113 (Fig. 4) has been satisfied, and changes the state from the state SB to the state SD. As described above, even if the transmission apparatus 11-1 changes its state from the state SB to the state SD, it continues to transmit the RTP+RTCP 211 or the RTCP 212 to the reception apparatus 13 via the network 12 to the reception apparatus 13.

Subsequently, suppose that, for example, the state transition condition 104 (Fig. 4) of the transmission apparatus 11-2 has been satisfied (suppose that command "rtp_tx=ON" is input).

At a time t3 immediately after the state transition condition 104 has been satisfied, the transmission apparatus 11-2 transmits the RTP+RTCP 211 to the reception apparatus 13 via the network 12.

When the reception apparatus 13 receives the RTP+RTCP 211, it determines that the state transition condition 157 (Fig. 5) has been satisfied because it is in the state RC where the RTP from the transmission apparatus 11-1 is being received. Thus, the reception apparatus 13 generates the RTCP RR (rejection) 201 as the second control information in response to the RTCP (RTCP included in the RTP+RTCP 211) from the transmission apparatus 11-2, and transmits it to the transmission apparatus 11-2 via the network 12.

When the transmission apparatus 11-2 receives the RTCP RR (rejection) 201 via the network 12, it determines that the state transition condition 107 (Fig. 4) has been satisfied, and changes the state from the state SB to the state SC. In short, the transmission apparatus 11-2 stops the subsequent transmission of the RTP+RTCP 211 to the reception apparatus 13. It is noted, however, that the transmission apparatus 11-2 still periodically transmits the RTCP 212 to the reception apparatus 13 via the network 12.

Suppose, for example, that the transmission apparatus 11-2 transmits the RTCP 212 to the reception apparatus 13 via the network 12 at a time t4. In this assumption, since the reception apparatus 13 is still in the state RC where the RTP from the transmission apparatus 11-1 is being received, the reception apparatus 13 determines that the state transition condition 157 (Fig. 5) has been satisfied, and thus generates the RTCP RR (rejection) 201 to transmit it to the transmission apparatus 11-2 via the network 12.

At this time, the transmission apparatus 11-1 continues to transmit the RTP+RTCP 211 or the RTCP 212 to the reception apparatus 13 via the network 12 to the reception apparatus 13.

For example, when the transmission apparatus 11-1 transmits the RTP+RTCP 211 to the reception apparatus 13 via the network 12 at a time t5, the reception apparatus 13 receives it, and measures an error in the RTP included in the RTP+RTCP 211. If, for example, the measurement result indicates that the error is at a predetermined level or lower, the reception apparatus 13 determines that the transition estimation condition 156 (Fig. 5) has been satisfied, generates the RTCP RR (without error) 202, and transmits it to the transmission apparatus 11-1 via the network 12.

When the transmission apparatus 11-1 receives the RTCP RR (without error) 202, it determines that the state transition condition 114 (Fig. 4) has been satisfied, and changes the state from the state SD to the state SB.

The transmission apparatus 11-1 continues to transmit the RTP+RTCP 211 or the RTCP 212 to the reception apparatus 13 via the network 12 to the reception apparatus 13.

Subsequently, if the state transition condition 103 (Fig. 4) of the transmission apparatus 11-1 has been satisfied (if command "rtp_tx=OFF" has been input), for example, at a time t6, the transmission apparatus 11-1 changes its state from the state SB to the state SA.

As a result, the transmission apparatus 11-1 stops the transmission of the RTP+RTCP 211 and the RTCP 212 to the reception apparatus 13 via the network 12. Thus, since the reception apparatus 13 does not receive the RTP+RTCP 211 or the RTCP 212 from the transmission apparatus 11-1, it determines that the state transition condition 155 (Fig. 5) has been satisfied at a time t7 after a predetermined time from the time t6, and changes the state from the state RC to the state RB.

At this time, the transmission apparatus 11-2 periodically transmits the RTCP 212 to the reception apparatus 13 via the network 1. In this case, when the transmission apparatus 11-2 transmits the RTCP 212 to the reception apparatus 13 via the network 12 at a time t8 after the time t7 (after the state of the reception apparatus 13 has been changed to the state RB), the reception apparatus 13 receives it, determines that the state transition condition 154 (Fig. 5) has been satisfied, generates the RTCP RR (without error) 202, and transmits it to the transmission apparatus 11-2 via the network 12. The reception apparatus 13 then changes its state from the state RB to the state RC.

When the transmission apparatus 11-2 receives the RTCP RR (without error) 202, the transmission apparatus 11-2 determines that the state transition condition 108 (Fig. 4) has been satisfied, and changes its state from the state SC to the state SB. Subsequently, the transmission apparatus 11-2 transmits the RTP+RTCP 211 or the RTCP 212 to the reception apparatus 13 via the network 12.

When the reception apparatus 13 receives the RTP+RTCP 211 or the RTCP 212 from the transmission apparatus 11-2, the reception apparatus 13 generates the RTCP RR (RTCP RR (without error) 202 in the example of Fig. 6) as a response to the RTCP included in the RTP+RTCP 211 or the RTCP 212, and transmits it to the transmission apparatus 11-2 via the network 12.

Subsequently, when the state transition condition 159 (Fig. 5) of the reception apparatus 13 is satisfied (when the command "rtp_rx=OFF" is input), for example, at a time t9, the reception apparatus 13 changes the state from the state RC to the state RA.

Thus, the reception apparatus 13 does not accept the reception of the RTP from one of the transmission apparatus 11-1 and the transmission apparatus 11-2. Therefore, when the transmission apparatus 11-2 transmits the RTCP 212 to the reception apparatus 13 via the network 12 at a time t10 after the time t9 (after the state of the reception apparatus 13 has been changed to the state RA) and the reception apparatus 13 receives it, the reception apparatus 13 determines that the state transition condition 160 (Fig. 5) has been satisfied, generates the RTCP RR (rejection) 201, and transmits it to the transmission apparatus 11-2 via the network 12.

When the transmission apparatus 11-2 receives the RTCP RR (rejection) 201, the transmission apparatus 11-2 determines that the state transition condition 107 (Fig. 4) has been satisfied, and changes the state from the state SB to the state SC. In short, the transmission apparatus 11-2 stops the subsequent transmission of the RTP+RTCP 211 to the reception apparatus 13 via the network 12.

Similarly, for example, if the state transition condition 104 (Fig. 4) of the transmission apparatus 11-1 has been satisfied (if the command "rtp_tx=ON" is input) at a time t11 after the time t9 (after the state of the reception apparatus 13 has been changed to the state RA), the transmission apparatus 11-1 changes the state from the state SA to the state SB, and transmits the RTP+RTCP 211 to the reception apparatus 13 via the network 12.

In this case, when the reception apparatus 13 receives the RTP+RTCP 211, the reception apparatus 13 determines that the state transition condition 160 (Fig. 5) has been satisfied, generates the RTCP RR (rejection) 201, and transmits it to the transmission apparatus 11-1 via the network 12.

When the transmission apparatus 11-1 receives the RTCP RR (rejection) 201, the transmission apparatus 11-1 determines that the state transition condition 107 (Fig. 4) has been satisfied, and changes the state from the state SB to the state SC. In short, the transmission apparatus 11-1 also stops the subsequent transmission of the RTP+RTCP 211 to the reception apparatus 13 via the network 12.

As described above, in the information distribution system 1, each of the transmission apparatus 11-1 and the transmission apparatus 11-2 generates the first control signal (RTCP) that makes a request to the reception apparatus 13 for the transmission of the result of a determination as to whether or not the reception apparatus 13 can receive the image signal (RTP), and then transmits the RTCP to the reception apparatus 13 via the network 12. When the information reception apparatus 13 receives the RTCP, the information reception apparatus 13 determines whether or not it receives the RTP from the transmission apparatus 11-1 or 11-2 that has transmitted the RTCP, generates the second control signal (the RTCP RR (acceptance) (the RTCP RR (without error) or the RTCP RR (with error)) or the RTCP RR (rejection)) indicating the determination result, and transmits it to the corresponding transmission apparatus 11-1 or 11-2 via the network 12.

Therefore, when each of the transmission apparatus 11-1 and the transmission apparatus 11-2, sharing the limited band of the network 12, distributes (transfers) an image signal in the information distribution system 1, it is possible to avoid the conflicting of the respective transfer packets. Furthermore, the transmission apparatus 11-1 can detect the reception state at the reception apparatus 13.

Furthermore, the reception apparatus 13 can acquire an image signal from two or more transmission apparatuses (the transmission apparatus 11-1 and the transmission apparatus 11-2 in the example of Fig. 1).

The above-described series of processing can be carried out not only with hardware but also with software.

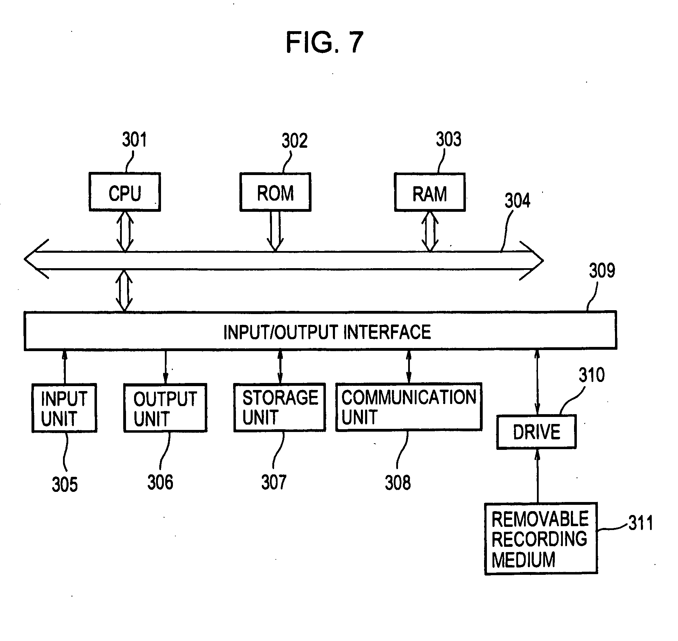

In this case, the transmission apparatus or the reception apparatus of the information distribution system 1 includes, for example, a personal computer, as shown in Fig. 7.

In Fig. 7, a CPU (Central Processing Unit) 301 carries out various types of processing according to programs stored in a ROM (Read Only Memory) 302 or programs loaded from a storage unit 307 into a RAM (Random Access Memory) 303. Furthermore, data required for the CPU 301 to carry out various types of processing is stored in the RAM 303 as necessary.

Furthermore, data required for the CPU 301 to carry out various types of processing is stored in the RAM 303 as necessary.

The CPU 301, the ROM 302, and RAM 303 are interconnected via a bus 304. An input/output interface 309 is also connected to the bus 304.

An input unit 305 including, for example, a keyboard; an output unit 306 including, for example, a display; the storage unit 307 including, for example, a hard disk; and a communicating unit 308 for communication processing with other units via a network are connected to the input/output interface 309.

Furthermore, a drive 310 is connected to the input/output interface 309 as required, and a removable recording medium 311, such as a magnetic disk, an optical disk, an magneto-optical disk, or a semiconductor memory, is placed in the drive 310, so that a computer program read out from them is installed into the storage unit 307, as required.

The programs for carrying out the above-described series of processing are installed via a network or from a recording medium. As shown in Fig. 7, the recording medium containing the program may be a removable recording medium 311 (package medium), placed in the drive 310, including a magnetic disk (including a flexible disk); an optical disk (including a compact disc-read only memory, i.e., CD-ROM and a digital versatile disk, i.e., DVD); a magneto-optical disk (including a mini-disc, i.e., MD); or a semiconductor memory if such a program is supplied on the recording medium separately from a user's computer. The recording medium may be the ROM 302 or a hard disk in the storage unit 307 of a user's computer if the program is supplied preinstalled in the ROM 302 or a hard disk of the user's computer.

In the present invention, the steps of programs recorded on the recording medium may or may not be followed time-sequentially in order of described steps. Furthermore, the steps may be followed in parallel or independently from one another.

Furthermore, in this description, the term "system" indicates the entire apparatus including a plurality of apparatuses and processing units.

### Industrial Applicability

As described above, according to this embodiment, a large volume of information, such as an image signal, can be distributed. In addition, an image transmitted from each of two or more transmission apparatuses can be distributed to a reception apparatus even in a limited band.

## Claims

1. An information distribution system comprising an information transmission apparatus (11) for transmitting main information and an information reception apparatus (13) for receiving the main information transmitted from the information transmission apparatus, the information reception apparatus (13) being connected to the information transmission apparatus (11) via a network (12), wherein
the information transmission apparatus (11) is configured to generate first control information for making a request to the information reception apparatus (13) for transmission of a result of a determination as to whether or not the information reception apparatus (13) can receive the main information and to transmit the generated first control information via the network (12);
the information reception apparatus (13) is configured, when receiving the first control information transmitted from the information transmission apparatus (11) via the network (12), to determine whether or not to receive the main information transmitted from the information transmission apparatus (11) that has transmitted the received first control information and to generate second control information indicating a result of the determination to transmit the generated second control information to the information transmission apparatus (11) via the network (12); and
the information transmission apparatus (11) is configured to receive the second control information transmitted from the information reception apparatus (13) via the network (12), and to prohibit the transmission of the main information to the information reception apparatus (13) if the received second control information indicates a determination result that the main information is not received or to transmit the main information to the information reception apparatus (13) via the network (12) if the second control information indicates a determination result that the main information is received,
wherein the information transmission apparatus (11) is configured, in response to receiving the second control information, to be in:
a first transmission state when the main information is being normally received by the information reception apparatus (13),
a second transmission state when the information transmission apparatus (11) cannot distribute the main information to the information reception apparatus (13),
and a third transmission state when an error has occurred in the main information transmitted from the information transmission apparatus (11) and received by the information reception apparatus (13).

2. An information distribution method of an information distribution system including an information transmission apparatus (11) for transmitting main information and an information reception apparatus (13) for receiving the main information transmitted from the information transmission apparatus, the information reception apparatus (13) being connected to the information transmission apparatus (11) via a network (12), the method comprising:
a first transmission step of generating, in the information transmission apparatus, first control information for making a request to the information reception apparatus (13) for transmission of a result of a determination as to whether or not the information reception apparatus (13) can receive the main information and transmitting the generated first control information via the network (12);
a second transmission step of determining whether or not the main information transmitted from the information transmission apparatus (11) that has transmitted the received first control information is received when the information reception apparatus (13) receives via the network (12) the first control information transmitted from the information transmission apparatus (11) by the processing in the first transmission step, and generating second control information indicating a result of the determination to transmit the generated second control information to the information transmission apparatus (11) via the network (12); and
a transmission control step of receiving in the information transmission apparatus (11) via the network (12) the second control information transmitted from the information reception apparatus (13) by the processing in the second transmission step, and prohibiting the transmission of the main information to the information reception apparatus (13) if the received second control information indicates a determination result that the main information is not received or permitting the main information to be transmitted to the information reception apparatus (13) via the network (12) if the second control information indicates a determination result that the main information is received,
wherein the second control information received causes the information transmission apparatus (11) to be in:
a first transmission state when the main information is being normally received by the information reception apparatus (13),
a second transmission state when the information transmission apparatus (11) cannot distribute the main information to the information reception apparatus (13),
and a third transmission state when an error has occurred in the main information transmitted from the information transmission apparatus (11) and received by the information reception apparatus (13).

3. An information transmission apparatus (11) connectable to an information reception apparatus (13) via a network (12), comprising:
generation means for generating first control information for making a request to the information reception apparatus (13) for transmission of a result of a determination as to whether or not the information reception apparatus (13) can receive main information;
transmission means for transmitting the first control information generated by the generation means to the information reception apparatus (13) via the network (12);
reception means for receiving, via the network (12), second control information transmitted from the information reception apparatus (13) as a response to the first control information transmitted by the transmission means, the second control information indicating a result of a determination as to whether or not the information reception apparatus (13) receives the main information; and
transmission control means for prohibiting the transmission means from transmitting the main information to the information reception apparatus (13) if the second control information received by the reception means indicates a determination result that the information reception apparatus (13) does not receive the main information or permitting the transmission means to transmit the main information to the information reception apparatus (13) via the network (12) if the second control information indicates a determination result that the information reception apparatus (13) receives the main information,
wherein the information transmission apparatus (11) is configured, in response to receiving the second control information, to be in:
a first transmission state when the main information is being normally received by the information reception apparatus (13),
a second transmission state when the information transmission apparatus (11) cannot distribute the main information to the information reception apparatus (13),
and a third transmission state when an error has occurred in the main information transmitted from the information transmission apparatus (11) and received by the information reception apparatus (13).

4. The information transmission apparatus (11) according to claim 3, wherein the transmission means is configured to transmit the first control information with the main information when the transmission means transmits the main information.

5. The information transmission apparatus (11) according to claim 3, wherein the transmission means is configured to transmit the first control information at a predetermined time interval.

6. The information transmission apparatus (11) according to claim 3, wherein the first and second control information are RTCP packet information.

7. The information transmission apparatus (11) according to claim 3, wherein the second control information comprises an acceptance signal or a rejection signal, the acceptance signal comprising a signal indicating a state of the information reception apparatus (13) where a normal signal is being received or a signal indicating a state of the information reception apparatus (13) where an error has occurred in the received signal.

8. The information transmission apparatus (11) according to claim 3, wherein if the second control information is information indicating a reception state at the information reception apparatus (13), the transmission control means is configured to determine that the second control information indicates a determination result that the information reception apparatus (13) receives the main information and to permit the transmission means to transmit the main information to the information reception apparatus (13) via the network (12).

9. The information transmission apparatus (11) according to claim 8, wherein the reception state is represented by a state of occurrence of an error in the main information received by the information reception apparatus (13).

10. The information transmission apparatus (11) according to claim 3, wherein the information transmission apparatus (11) is configured to be in a non-transmission state when the information transmission apparatus (11) is not transmitting a signal.

11. An information transmission method of an information transmission apparatus (11) connectable to an information reception apparatus (13) via a network (12), the method comprising:
a generation step of generating first control information for making a request to the information reception apparatus (13) for transmission of a result of a determination as to whether or not the information reception apparatus (13) can receive main information;
a transmission step of transmitting the first control information generated by the processing in the generation step to the information reception apparatus (13) via the network (12);
a reception step of receiving, via the network (12), second control information transmitted from the information reception apparatus (13) as a response to the first control information transmitted by the processing in the transmission step, the second control information indicating a result of a determination as to whether or not the information reception apparatus (13) receives the main information; and
a transmission control step of prohibiting the main information from being transmitted to the information reception apparatus (13) if the second control information received by the processing in the reception step indicates a determination result that the information reception apparatus (13) does not receive the main information or permitting the main information to be transmitted to the information reception apparatus (13) via the network (12) if the second control information indicates a determination result that the information reception apparatus (13) receives the main information,
wherein the second control information received causes the information transmission apparatus (11) to be in:
a first transmission state when the main information is being normally received by the information reception apparatus (13),
a second transmission state when the information transmission apparatus (11) cannot distribute the main information to the information reception apparatus (13),
and a third transmission state when an error has occurred in the main information transmitted from the information transmission apparatus (11) and received by the information reception apparatus (13).

12. A recording medium having a program recorded thereon, the program enabling a computer to execute a control method for controlling an information transmission apparatus (11) connectable to an information reception apparatus (13) via a network (12), the control method comprising:
a generation step of generating first control information for making a request to the information reception apparatus (13) for transmission of a result of a determination as to whether or not the information reception apparatus (13) can receive main information;
a transmission step of transmitting the first control information generated by the processing in the generation step to the information reception apparatus (13) via the network (12);
a reception step of receiving, via the network (12), second control information transmitted from the information reception apparatus (13) as a response to the first control information transmitted by the processing in the transmission step, the second control information indicating a result of a determination as to whether or not the information reception apparatus (13) receives the main information; and
a transmission control step of prohibiting the main information from being transmitted to the information reception apparatus (13) if the second control information received by the processing in the reception step indicates a determination result that the information reception apparatus (13) does not receive the main information or permitting the main information to be transmitted to the information reception apparatus (13) via the network (12) if the second control information indicates a determination result that the information reception apparatus (13) receives the main information,
wherein the second control information received causes the information transmission apparatus (11) to be in:
a first transmission state when the main information is being normally received by the information reception apparatus (13),
a second transmission state when the information transmission apparatus (11) cannot distribute the main information to the information reception apparatus (13),
and a third transmission state when an error has occurred in the main information transmitted from the information transmission apparatus (11) and received by the information reception apparatus (13).

13. A program for enabling a computer to execute a control method for controlling an information transmission apparatus (11) connectable to an information reception apparatus (13) via a network (12), the control method comprising:
a generation step of generating first control information for making a request to the information reception apparatus (13) for transmission of a result of a determination as to whether or not the information reception apparatus (13) can receive main information;
a transmission step of transmitting the first control information generated by the processing in the generation step to the information reception apparatus (13) via the network (12);
a reception step of receiving, via the network (12), second control information transmitted from the information reception apparatus (13) as a response to the first control information transmitted by the processing in the transmission step, the second control information indicating a result of a determination as to whether or not the information reception apparatus (13) receives the main information; and
a transmission control step of prohibiting the main information from being transmitted to the information reception apparatus (13) if the second control information received by the processing in the reception step indicates a determination result that the information reception apparatus (13) does not receive the main information or permitting the main information to be transmitted to the information reception apparatus (13) via the network (12) if the second control information indicates a determination result that the information reception apparatus (13) receives the main information,
wherein the second control information received causes the information transmission apparatus (11) to be in:
a first transmission state when the main information is being normally received by the information reception apparatus (13),
a second transmission state when the information transmission apparatus (11) cannot distribute the main information to the information reception apparatus (13),
and a third transmission state when an error has occurred in the main information transmitted from the information transmission apparatus (11) and received by the information reception apparatus (13).

14. An information reception apparatus (13) connectable to an information transmission apparatus (11) for transmitting main information via a network (12), comprising:
reception means for receiving first control information transmitted from the information transmission apparatus (11) via the network (12), the first control information making a request for transmission of a result of a determination as to whether or not the main information can be received;
generation means for determining whether or not the main information transmitted from the information transmission apparatus (11) that has transmitted the first control information is received when the first control information is received by the reception means and generating second control information indicating a result of the determination; and
transmission means for transmitting the second control information generated by the generation means to the information transmission apparatus (11) via the network (12),
wherein the second control information transmitted by the transmitting means causes the information transmission apparatus (11) to be in:
a first transmission state when the main information is being normally received by the information reception apparatus (13),
a second transmission state when the information transmission apparatus (11) cannot distribute the main information to the information reception apparatus (13),
and a third transmission state when an error has occurred in the main information transmitted from the information transmission apparatus (11) and received by the information reception apparatus (13).

15. The information reception apparatus (13) according to claim 14, wherein
the information reception apparatus (13) is connectable to a first information transmission apparatus (11) and to a second information transmission apparatus (11) via the network (12);
the generation means is configured to determine that the main information transmitted from the second information transmission apparatus (11) is not received when the first control information is received from the second information transmission apparatus (11) while the main information transmitted from the first information transmission apparatus (11) is being received by the reception means, and to generate second control information indicating a result of the determination; and
the transmission means is configured to transmit the second information generated by the generation means to the second information transmission apparatus (11) via the network (12).

16. The information reception apparatus (13) according to claim 14, wherein the first and second control information are RTCP packet information.

17. The information reception apparatus (13) according to claim 14, wherein the generation means is configured to generate information indicating a reception state at the information reception apparatus (13) as the second control information when a determination is made that the main information is received.

18. The information reception apparatus (13) according to claim 17, wherein the reception state is represented by a state of occurrence of an error in the main information received by the reception means.

19. An information reception method of an information reception apparatus (13) connectable to an information transmission apparatus (11) for transmitting main information via a network (12), comprising:
a reception step of receiving first control information transmitted from the information transmission apparatus (11) via the network (12), the first control information making a request for transmission of a result of a determination as to whether or not the main information can be received;
a generation step of determining whether or not the main information transmitted from the information transmission apparatus (11) that has transmitted the first control information is received when the first control information is received by the processing in the reception step and generating second control information indicating a result of the determination; and
a transmission step of transmitting the second control information generated by the processing in the generation step to the information transmission apparatus (11) via the network (12),
wherein the second control information transmitted by the transmitting means causes the information transmission apparatus (11) to be in:
a first transmission state when the main information is being normally received by the information reception apparatus (13),
a second transmission state when the information transmission apparatus (11) cannot distribute the main information to the information reception apparatus (13),
and a third transmission state when an error has occurred in the main information transmitted from the information transmission apparatus (11) and received by the information reception apparatus (13).

20. A recording medium having a program recorded thereon, the program enabling a computer to execute a control method for controlling an information reception apparatus (13) connectable to an information transmission apparatus (11) for transmitting main information via a network (12), the control method comprising:
a reception step of receiving first control information transmitted from the information transmission apparatus (11) via the network (12), the first control information making a request for transmission of a result of a determination as to whether or not the main information can be received;
a generation step of determining whether or not the main information transmitted from the information transmission apparatus (11) that has transmitted the first control information is received when the first control information is received by the processing in the reception step and generating second control information indicating a result of the determination; and
a transmission step of transmitting the second control information generated by the processing in the generation step to the information transmission apparatus (11) via the network (12),
wherein the second control information transmitted by the transmitting means causes the information transmission apparatus (11) to be in:
a first transmission state when the main information is being normally received by the information reception apparatus (13),
a second transmission state when the information transmission apparatus (11) cannot distribute the main information to the information reception apparatus (13),
and a third transmission state when an error has occurred in the main information transmitted from the information transmission apparatus (11) and received by the information reception apparatus (13).

21. A program for enabling a computer to execute a control method for controlling an information reception apparatus (13) connectable to an information transmission apparatus (11) for transmitting main information via a network (12), the control method comprising:
a reception step of receiving first control information transmitted from the information transmission apparatus (11) via the network (12), the first control information making a request for transmission of a result of a determination as to whether or not the main information can be received;
a generation step of determining whether or not the main information transmitted from the information transmission apparatus (11) that has transmitted the first control information is received when the first control information is received by the processing in the reception step and generating second control information indicating a result of the determination; and
a transmission step of transmitting the second control information generated by the processing in the generation step to the information transmission apparatus (11) via the network (12),
wherein the second control information transmitted by the transmitting means causes the information transmission apparatus (11) to be in:
a first transmission state when the main information is being normally received by the information reception apparatus (13),
a second transmission state when the information transmission apparatus (11) cannot distribute the main information to the information reception apparatus (13),
and a third transmission state when an error has occurred in the main information transmitted from the information transmission apparatus (11) and received by the information reception apparatus (13).

## Patentansprüche

1. Informationsverteilungssystem, welches eine Informationsübertragungsvorrichtung (11) zum Übertragen von Hauptinformation und eine Informationsempfangsvorrichtung (13) zum Empfangen der Hauptinformation, welche von der Informationsübertragungsvorrichtung übertragen wird, umfasst, wobei die Informationsempfangsvorrichtung (13) mit der Informationsübertragungsvorrichtung (11) über ein Netzwerk (12) verbunden ist,
wobei
die Informationsübertragungsvorrichtung (11) konfiguriert ist, erste Steuerinformation zu erzeugen, um eine Anfrage an die Intormationsempfangsvorrichtung (13) auf Übertragung eines Ergebnisses einer Bestimmung zu stellen, ob die Informationsempfangsvorrichtung (13) die Hauptinformation empfangen kann oder nicht, und um die erzeugte erste Steuerinformation über das Netzwerk (12) zu übertragen;
die Informationsempfangsvorrichtung (13) konfiguriert ist, wenn die erste Steuerinformation, welche von der Informationsübertragungsvorrichtung (11) über das Netzwerk (12) übertragen wird, zu bestimmen, ob oder nicht die Hauptinformation, welche von der Informationsübertragungsvorrichtung (11) übertragen wird, empfangen wird, welche die empfangene erste Steuerinformation übertragen hat, und um zweite Steuerinformation, welche ein Ergebnis der Bestimmung zeigt, zu erzeugen, um die erzeugte zweite Steuerinformation zur Informationsübertragungsvorrichtung (11) über das Netzwerk (12) zu übertragen; und
die Informationsübertragungsvorrichtung (11) konfiguriert ist, die zweite Steuerinformation, welche von der Informationsempfangsvorrichtung (13) über das Netzwerk (12) übertragen wird, zu empfangen, um die Übertragung der Hauptinformation zur Informationsempfangsvorrichtung (13) zu verhindern, wenn die empfangene zweite Steuerinformation ein Bestimmungsergebnis zeigt, dass die Hauptinformation nicht empfangen wurde, oder um die Hauptinformation zur Informationsempfangsvorrichtung (13) über das Netzwerk (12) zu übertragen, wenn die zweite Steuerinformation ein Bestimmungsergebnis zeigt, dass die Hauptinformation empfangen wird,
wobei die Informationsübertragungsvorrichtung (11) konfiguriert ist, um als Antwort auf das Empfangen der zweiten Steuerinformation zu sein in:
einem ersten Übertragungszustand, wenn die Hauptinformation durch die Informationsempfangsvorrichtung (13) normal empfangen wird,
einem zweiten Übertragungszustand, wenn die Informationsübertragungsvorrichtung (11) die Hauptinformation nicht an die Informationsempfangsvorrichtung (13) verteilen kann,
und einem dritten Übertragungszustand, wenn ein Fehler in der Hauptinformation aufgetreten ist, welche von der Informationsübertragungsvorrichtung (11) übertragen wird und welche durch die Informationsempfangsvorrichtung (13) empfangen wird.

2. Informationsverteilungsverfahren eines Informationsverteilungssystems, welches eine Informationsübertragungsvorrichtung (11) zum Übertragen von Hauptinformation und eine Informationsempfangsvorrichtung (13) zum Empfangen der Hauptinformation, welche von der Informationsübertragungsvorrichtung (11) übertragen wird, aufweist, wobei die Informationsempfangsvorrichtung (13) mit der Informationsübertragungsvorrichtung (11) über ein Netzwerk (12) verbunden ist,
wobei das Verfahren umfasst:
einen ersten Übertragungsschritt zum Erzeugen - in der Informationsübertragungsvorrichtung - erster Steuerinformation, um eine Anfrage an die Informationsempfangsvorrichtung (13) zum Übertragen eines Ergebnisses einer Bestimmung zu stellen, ob die Informationsempfangsvorrichtung (13) die Hauptinformation empfangen kann oder nicht, und um die erzeugte erste Steuerinformation über das Netzwerk (12) zu übertragen;
einen zweiten Übertragungsschritt zum Bestimmen, ob die Hauptintormation, welche von der Informationsübertragungsvorrichtung (11) übertragen wurde, welche die erste empfangene Steuerinformation übertragen hat, empfangen wird oder nicht, wenn die Informationsempfangsvorrichtung (13) über das Netzwerk (12) die erste Steuerinformation, welche von der Infurmationsübertragungsvorrichtung (11) übertragen wurde, durch die Verarbeitung im ersten Übertragungsschritt empfängt, und zum Erzeugen zweiter Steuerinformation, welche ein Ergebnis der Bestimmung zeigt, um die erzeugte zweite Steuerinformation zur Informationsübertragungsvorrichtung (11) über das Netzwerk (12) zu übertragen; und
einen Übertragungssteuerschritt zum Empfangen - in der Inhormationsübertragungsvorrichtung (11) - über das Netzwerk (12) der zweiten Steuerinformation, welche von der Informationsempfangsvorrichtung (13) durch die Verarbeitung im zweiten Übertragungsschritt übertragen wurde, und zum Verhindern der Übertragung der Hauptinformation zur Informationsempfangsvorrichtung (13), wenn die empfangene zweite Steuerinformation ein Bestimmungsergebnis zeigt, dass die Hauptinformation nicht empfangen wird, oder um zuzulassen, dass die Hauptinformation zur Informationsempfangsvorrichtung (13) über das Netzwerk (12) übertragen wird, wenn die zweite Steuerinformation ein Bestimmungsergebnis zeigt, dass die Hauptinformation empfangen wird,
wobei die zweite empfangene Steuerinformation veranlasst, dass die Informationsübertragungsvorrichtung (11) ist in:
einem ersten Übertragungszustand, wenn die Hauptinformation durch die Informationsempfangsvorrichtung (13) normal empfangen wird,
einem zweiten Übertragungszustand, wenn die Informationsübertragungsvorrichtung (11) die Hauptinformation an die Informationsempfangsvorrichtung (13) nicht verteilen kann,
und einem dritten Übertragungszustand, wenn ein Fehler in der Hauptinformation, welche von der Informationsübertragungsvorrichtung (11) übertragen wird und welche durch die Informationsempfangsvorrichtung (13) empfangen wird, aufgetreten ist.

3. Informationsübertragungsvorrichtung (11), welche mit einer Informationsempfangsvorrichtung (13) über ein Netzwerk (12) verbunden werden kann, welche umfasst:
eine Erzeugungseinrichtung zum Erzeugen erster Steuerinformation, um eine Anfrage an die Informationsempfangsvorrichtung (13) auf Übertragung eines Ergebnisses einer Bestimmung zu stellen, ob die Informationsempfangsvorrichtung (13) Hauptinformation empfangen kann oder nicht;
eine Übertragungseinrichtung zum Übertragen der ersten Steuerinformation, welche durch die Erzeugungseinrichtung erzeugt wird, zur Informationsempfangsvorrichtung (13) über das Netzwerk (12);
eine Empfangseinrichtung zum Empfangen - über das Netzwerk (12) - zweiter Steuerinformation, welche von der Informationsempfangsvorrichtung (13) übertragen wird, als eine Antwort auf die erste Steuerinformation, welche durch die Übertragungseinrichtung übertragen wird, wobei die zweite Steuerinformation ein Ergebnis einer Bestimmung zeigt, ob die Informationsempfangsvorrichtung (13) die Hauptinformation empfängt oder nicht; und
eine Übertragungssteuereinrichtung zum Verhindern, dass die Übertragungseinrichtung die Hauptinformation zur Informationsempfangsvorrichtung (13) überträgt, wenn die zweite Steuerinformation, welche durch die Empfangseinrichtung empfangen wird, ein Bestimmungsergebnis zeigt, dass die Informationsempfangsvorrichtung (13) die Hauptinformation nicht empfängt, oder um zu verhindern, dass die Übertragungseinrichtung die Hauptinformation zur Informationsempfangsvorrichtung (13) über das Netzwerk (12) überträgt, wenn die zweite Steuerinformation ein Bestimmungsergebnis zeigt, dass die Informationsempfangsvorrichtung (13) die Hauptinformation empfängt,
wobei die Informationsübertragungsvorrichtung (11) konfiguriert ist, als Antwort auf das Empfangen der zweiten Steuerinformation zu sein in:
einem ersten Übertragungszustand, wenn die Hauptinformation durch die Informationsempfangsvorrichtung (13) normal empfangen wird,
einem zweiten Übertragungszustand, wenn die Informationsübertragungsvorrichtung (11) die Hauptinformation an die Informationsempfangsvorrichtung (13) nicht verteilen kann,
und einem dritten Übertragungszustand, wenn ein Fehler in der Hauptinformation aufgetreten ist, welche von der Informationsübertragungsvorrichtung (11) übertragen wird und durch die Informationsempfangsvorrichtung (13) empfangen wird.

4. Informationsübertragungsvorrichtung (11) nach Anspruch 3, wobei die Übertragungseinrichtung konfiguriert ist, die erste Steuerinformation mit der Hauptinformation zu übertragen, wenn die Übertragungseinrichtung die Hauptinformation überträgt.

5. Informationsübertragungsvorrichtung (11) nach Anspruch 3, wobei die Übertragungseinrichtung konfiguriert ist, die erste Steuerinformation in einem vorher festgelegten Zeitintervall zu übertragen.

6. Informationsübertragungsvorrichtung (11) nach Anspruch 3, wobei die erste und die zweite Steuerinformation RTCP-Paketinformation ist.

7. Informationsübertragungsvorrichtung (11) nach Anspruch 3, wobei die zweite Steuerinformation ein Akzeptanzsignal oder ein Rückweisungssignal umfasst, wobei das Akzeptanzsignal ein Signal umfasst, welches einen Zustand der Informationsempfangsvorrichtung (13) zeigt, wo ein Normalsignal empfangen wird, oder ein Signal, welches einen Zustand der Informationsempfangsvorrichtung (13) zeigt, wo ein Fehler im Empfangssignal aufgetreten ist.

8. Informationsübertragungsvorrichtung (11) nach Anspruch 3, wobei, wenn die zweite Steuerinformation Information ist, welche einen Empfangszustand in der Informationsempfangsvorrichtung (13) zeigt, die Übertragungssteuereinrichtung konfiguriert ist, zu bestimmen, dass die zweite Steuerinformation ein Bestimmungsergebnis zeigt, dass die Informationsempfangsvorrichtung (13) die Hauptinformation empfängt, und um zuzulassen, dass die Übertragungseinrichtung die Hauptinformation zur Informationsempfangsvorrichtung (13) über das Netzwerk (12) überträgt.

9. Informationsübertragungsvorrichtung (11) nach Anspruch 8, wobei der Empfangszustand durch einen Auftretungszustand eines Fehlers in der Hauptinformation, welche durch die Informationsempfangsvorrichtung (13) empfangen wird, gezeigt wird.

10. Informationsübertragungsvorrichtung (11) nach Anspruch 3, wobei die Intormationsübertragungsvorrichtung (11) konfiguriert ist, in einem Nichtübertragungszustand zu sein, wenn die Informationsübertragungsvorrichtung (11) kein Signal überträgt.

11. Informationsübertragungsverfahren einer Informationsübertragungsvorrichtung (11), welche mit einer Informationsempfangsvorrichtung (13) über ein Netzwerk (12) verbunden werden kann, wobei das Verfahren umfasst:
einen Erzeugungsschritt zum Erzeugen erster Steuerinformation, um eine Anfrage an die Informationsempfangsvorrichtung (13) auf Übertragung eines Ergebnisses einer Bestimmung zu stellen, ob die Informationsempfangsvorrichtung (13) Hauptinformation empfangen kann oder nicht;
einen Übertragungsschritt zum Übertragen der ersten Steuerinformation, welche durch die Verarbeitung im Erzeugungsschritt erzeugt wurde, an die Informationsempfangsvorrichtung (13) über das Netzwerk (12);
einen Empfangsschritt zum Empfangen - über das Netzwerk (12) - zweiter Steuerinformation, welche von der Informationsempfangsvorrichtung (13) übertragen wird, als eine Antwort auf die erste Steuerinformation, welche durch die Verarbeitung im Übertragungsschritt übertragen wurde, wobei die zweite Steuerinformation ein Ergebnis einer Bestimmung zeigt, ob die Informationsempfangsvorrichtung (13) die Hauptinformation empfängt oder nicht; und
einen Übertragungssteuerschritt zum Verhindern, dass die Hauptinformation zur Informationsempfangsvorrichtung (13) übertragen wird, wenn die zweite Steuerinformation, welche durch die Verarbeitung im Empfangsschritt empfangen wurde, ein Bestimmungsergebnis zeigt, dass die Intormationsempfangsvorrichtung (13) die Hauptinformation nicht empfängt, oder um zuzulassen, dass die Hauptinformation zur Informationsempfangsvorrichtung (13) über das Netzwerk (12) übertragen wird, wenn die zweite Steuerinformation ein Bestimmungsergebnis zeigt, dass die Informationsempfangsvorrichtung (13) die Hauptinformation empfängt,
wobei die zweite empfangene Steuerinformation veranlasst, dass die Informationsübertragungsvorrichtung (11) ist in:
einem ersten Übertragungszustand, wenn die Hauptinformation durch die Informationsempfangsvorrichtung (13) normal empfangen wird,
einem zweiten Übertragungszustand, wenn die Informationsübertragungsvorrichtung (11) die Hauptinformation an die Informationsempfangsvorrichtung (13) nicht verteilen kann,
und einem dritten Übertragungszustand, wenn ein Fehler in der Hauptinformation, welche von der Informationsübertragungsvorrichtung (11) übertragen wurde und welche durch die Informationsempfangsvorrichtung (13) empfangen wurde, aufgetreten ist.

12. Aufzeichnungsmedium, auf welchem ein Programm aufgezeichnet ist, wobei das Programm es einem Computer ermöglicht, ein Steuerverfahren auszuführen, um eine Informationsübertragungsvorrichtung (11), welche mit einer Informationsempfangsvorrichtung (13) über ein Netzwerk (12) verbunden werden kann, zu steuern, wobei das Steuerverfahren umfasst:
einen Erzeugungsschritt zum Erzeugen erster Steuerinformation, um eine Anfrage an die Informationsempfangsvorrichtung (13) auf Übertragung eines Ergebnisses einer Bestimmung zu stellen, ob die Informationsempfangsvorrichtung (13) Hauptinformation empfangen kann oder nicht,
einen Übertragungsschritt zum Übertragen der ersten Steuerinformation, welche durch die Verarbeitung im Erzeugungsschritt erzeugt wird, an die Informationsempfangsvorrichtung (13) über das Netzwerk (12);
einen Empfangsschritt zum Empfangen - über das Netzwerk (12) - zweiter Steuerinformation, welche von der Informationsempfangsvorrichtung (13) übertragen wird, als Antwort auf die erste Steuerinformation, welche durch die Verarbeitung im Übertragungsschritt übertragen wird, wobei die zweite Steuerinformation ein Ergebnis einer Bestimmung zeigt, ob die Informationsempfangsvorrichtung (13) die Hauptinformation empfängt oder nicht; und
einen Übertragungssteuerschritt zum Verhindern, dass die Hauptinformation zur Informationsempfangsvorrichtung (13) übertragen wird, wenn die zweite Steuerinformation durch die Verarbeitung im Empfangsschritt ein Bestimmungsergebnis zeigt, dass die Informationsempfangsvorrichtung (13) die Hauptinformation nicht empfängt, oder um zuzulassen, dass die Hauptinformation zur Informationsempfangsvorrichtung (13) über das Netzwerk (12) übertragen wird, wenn die zweite Steuerinformation ein Bestimmungsergebnis zeigt, dass die Informationsempfangsvorrichtung (13) die Hauptinformation empfängt,
wobei die zweite empfangene Steuerinformation veranlasst, dass die Informationsübertragungsvorrichtung (11) ist in:
einem ersten Übertragungszustand, wenn die Hauptinformation durch die Informationsempfangsvorrichtung (13) normal empfangen wird,
einem zweiten Übertragungszustand, wenn die Informationsübertragungsvorrichtung (11) die Hauptinformation an die Informationsempfangsvorrichtung (13) nicht verteilen kann,
und einem dritten Übertragungszustand, wenn ein Fehler in der Hauptinformation, welche von der Informationsübertragungsvorrichtung (11) übertragen wird und welche durch die Informationsempfangsvorrichtung (13) empfangen wird, aufgetreten ist.

13. Programm, um es einem Computer zu ermöglichen, ein Steuerverfahren zum Steuern einer Informationsübertragungsvorrichtung (11) auszuführen, welche mit einer Informationsempfangsvorrichtung (13) über ein Netzwerk (12) verbunden werden kann, wobei das Steuerverfahren umfasst:
einen Erzeugungsschritt zum Erzeugen erster Steuerinformation, um eine Anfrage an die Informationsempfangsvorrichtung (13) auf Übertragung eines Ergebnisses einer Bestimmung zu stellen, ob die Informationsempfangsvorrichtung (13) Hauptinformation empfangen kann oder nicht;
einen Übertragungsschritt zum Übertragen der ersten Steuerinformation, welche durch die Verarbeitung im Erzeugungsschritt erzeugt wurde, zur Informationsempfangsvorrichtung (13) über das Netzwerk (12);
einen Empfangsschritt zum Empfangen - über das Netzwerk (12) - zweiter Steuerinformation, welche von der Informationsempfangsvorrichtung (13) übertragen wird, als Antwort auf die erste Steuerinformation, welche durch die Verarbeitung im Übertragungsschritt übertragen wurde, wobei die zweite Steuerinformation ein Ergebnis einer Bestimmung zeigt, ob die Informationsempfangsvorrichtung (13) die Hauptinformation empfängt oder nicht; und
einen Übertragungssteuerschritt zum Verhindern, dass die Hauptinformation zur Informationsempfangsvorrichtung (13) übertragen wird, wenn die zweite Steuerinformation, welche durch die Verarbeitung im Empfangsschritt empfangen wird, ein Bestimmungsergebnis zeigt, dass die Informationsempfangsvorrichtung (13) die Hauptinformation nicht empfängt, oder um zuzulassen, dass die Hauptinformation zur Informationsempfangsvorrichtung (13) über das Netzwerk (12) übertragen wird, wenn die zweite Steuerinformation ein Bestimmungsergebnis zeigt, dass die Informationsempfangsvorrichtung (13) die Hauptinformation empfängt,
wobei die zweite empfangene Steuerinformation veranlasst, dass die Intormationsübertragungsvorrichtung (11) ist in:
einem ersten Übertragungszustand, wenn die Hauptinformation durch die Informationsempfangsvorrichtung (13) normal empfangen wird,
einem zweiten Übertragungszustand, wenn die Intormationsübertragungsvorrichtung (11) die Hauptinformation an die Informationsempfangsvorrichtung (13) nicht verteilen kann,
und einem dritten Übentragungszustand, wenn ein Fehler in der Hauptinformation, welche von der Informationsübertragungsvorrichtung (11) übertragen wird und welche durch die Informationsempfangsvorrichtung (13) empfangen wird, aufgetreten ist.

14. Informationsempfangsvorrichtung (13), welche mit einer Informationsübertragungsvorrichtung (11) verbunden werden kann, um Hauptinformation über ein Netzwerk (12) zu übertragen, welche umfasst:
eine Empfangseinrichtung zum Empfangen erster Steuerinformation, welche von der Informationsübertragungsvorrichtung (11) über das Netzwerk (12) übertragen wird, wobei die erste Steuerinformation eine Anfrage auf Übertragung eines Ergebnisses einer Bestimmung stellt, ob die Hauptinformation empfangen werden kann oder nicht;
eine Erzeugungseinrichtung zum Bestimmen, ob die Hauptinformation, welche von der Informationsübertragungsvorrichtung (11) übertragen wurde, welche die erste Steuerinformation übertragen hat, empfangen wird, wenn die erste Steuerinformation durch die Empfangseinrichtung empfangen wird, und zum Erzeugen zweiter Steuerinformation, welche ein Ergebnis der Bestimmung zeigt; und
eine Übertragungseinrichtung zum Übertragen der zweiten Steuerinformation, welche durch die Erzeugungseinrichtung erzeugt wird, an die Informationsübertragungsvorrichtung (11) über das Netzwerk (12),
wobei die zweite Steuerinformation, welche durch die Übertragungseinrichtung übertragen wird, veranlasst, dass die Informationsübertragungsvorrichtung (11) ist in:
einem ersten Übertragungszustand, wenn die Hauptinformation durch die Informationsempfangsvorrichtung (13) normal empfangen wird,
einem zweiten Übertragungszustand, wenn die Informationsübertragungsvorrichtung (11) die Hauptinformation an die Informationsempfangsvorrichtung (13) nicht verteilen kann,
und einem dritten Übertragungszustand, wenn ein Fehler in der Hauptinformation, welche von der Informationsübertragungsvorrichtung (11) übertragen wird und welche durch die Informationsempfangsvorrichtung (13) empfangen wird, aufgetreten ist.

15. Informationsempfangsvorrichtung (13) nach Anspruch 14, wobei
die Informationsempfangsvorrichtung (13) mit einer ersten Informationsübertragungsvorrichtung (11) und mit einer zweiten Informationsübertragungsvorrichtung (11) über das Netzwerk (12) verbunden werden kann;
die Erzeugungseinrichtung konfiguriert ist, zu bestimmen, dass die Hauptinformation, welche von der zweiten Informationsübertragungsvorrichtung (11) übertragen wird, nicht empfangen wird, wenn die erste Steuerinformation von der zweiten Informationsübertragungsvorrichtung (11) empfangen wird während die Hauptinformation, welche von der ersten Informationsübertragungsvorrichtung (11) übertragen wird, durch die Empfangseinrichtung empfangen wird, und um zweite Steuerinformation zu erzeugen, welche ein Ergebnis der Bestimmung zeigt; und
die Übertragungseinrichtung konfiguriert ist, die zweite Information, welche durch die Erzeugungseinrichtung erzeugt wird, zur zweiten Intormationsübertragungsvorrichtung (11) über das Netzwerk (12) zu übertragen.

16. Informationsempfangsvorrichtung (13) nach Anspruch 14, wobei die erste und die zweite Steuerinformation RTCP-Paketinformation sind.

17. Informationsempfangsvorrichtung (13) nach Anspruch 14, wobei die Erzeugungseinrichtung konfiguriert ist, Information zu erzeugen, welche einen Empfangszustand in der Informationsempfangsvorrichtung (13) zeigt, als die zweite Steuerinformation, wenn eine Bestimmung getätigt wird, dass die Hauptinformation empfangen wird.

18. Informationsempfangsvorrichtung (13) nach Anspruch 17, wobei der Empfangszustand durch einen Auftretungszustand eines Fehlers in der Hauptinformation, welche durch die Empfangseinrichtung empfangen wird, gezeigt wird.

19. Informationsempfangsverfahren einer Informationsempfangsvorrichtung (13), welche mit einer Informationsübertragungsvorrichtung (11) verbunden werden kann, um Hauptinformation über ein Netzwerk (12) zu übertragen, welche umfasst:
einen Empfangsschritt zum Empfangen erster Steuerinformation, welche von der Informationsübertragungsvorrichtung (11) über das Netzwerk (12) übertragen wird, wobei die erste Steuerinformation eine Anfrage auf Übertragung eines Ergebnisses einer Bestimmung tätigt, ob die Hauptinformation empfangen werden kann oder nicht;
einen Erzeugungsschritt zum Bestimmen, ob die Hauptinformation, welche von der Informationsübertragungsvorrichtung (11) übertragen wird, welche die erste Steuerinformation übertragen hat, empfangen wird oder nicht, wenn die Steuerinformation durch die Verarbeitung im Empfangsschritt empfangen wird, und zweite Steuerinformation zu erzeugen, welche ein Ergebnis der Bestimmung zeigt; und
einen Übertragungsschritt zum Übertragen der zweiten Steuerinformation, welche durch die Verarbeitung im Erzeugungsschritt erzeugt wird, zur Informationsübertragungsvorrichtung (11) über das Netzwerk (12),
wobei die zweite Steuerinformation, welche durch die Übertragungseinrichtung übertragen wird, veranlasst, dass die Informationsübertragungsvorrichtung (11) ist in:
einem ersten Übertragungszustand, wenn die Hauptinformation durch die Informationsempfangsvorrichtung (13) normal empfangen wird,
einem zweiten Übertragungszustand, wenn die Intormationsübertragungsvorrichtung (11) die Hauptinformation zur Infornuitionsempfangsvorrichtung (13) nicht verteilen kann,
und einem dritten Übertragungszustand, wenn ein Fehler in der Hauptintormation aufgetreten ist, welche von der Informationsübertragungsvorrichtung (11) übertragen wird, und welche durch die Informationsempfangsvorrichtung (13) empfangen wird.

20. Autzeichnungsmedium, auf welchem ein Programm aufgezeichnet ist, wobei das Programm es einem Computer ermöglicht, ein Steuerverfahren zum Steuern einer Informationsempfangsvorrichtung (13) auszuführen, welche mit einer Informationsübertragungsvorrichtung (11) verbunden werden kann, um Hauptinformation über ein Netzwerk (12) zu übertragen, wobei das Steuerverfahren umfasst:
einen Empfangsschritt zum Empfangen erster Steuerinformation, welche von der Informationsübertragungsvorrichtung (11) über das Netzwerk (12) übertragen wird, wobei die erste Steuerinformation eine Anfrage auf Übertragung eines Ergebnisses einer Bestimmung stellt, ob die Hauptinformation empfangen werden kann oder nicht;
einen Erzeugungsschritt zum Bestimmen, ob die Hauptinformation, welche von der Informationsübertragungsvorrichtung (11) übertragen wird, welche die erste Steuerinformation übertragen hat, empfangen wird, wenn die erste Steuerinformation durch die Verarbeitung im Empfangsschritt empfangen wird, und zum Erzeugen zweiter Steuerinformation, welche ein Ergebnis der Bestimmung zeigt; und
einen Übertragungsschritt zum Übertragen der zweiten Steuerinformation, welche durch die Verarbeitung im Erzeugungsschritt erzeugt wird, zur Informationsübertragungsvorrichtung (11) über das Netzwerk (12),
wobei die zweite Steuerinformation, welche durch die Übertragungseinrichtung übertragen wird, veranlasst, dass die Intormationsübertragungsvorrichtung (11) ist in:
einem ersten Übertragungszustand, wenn die Hauptinformation durch die Informationsempfangsvorrichtung (13) normal empfangen wird,
einem zweiten Übertragungszustand, wenn die Informationsübertragungsvorrichtung (11) die Hauptinformation an die Informationsempfangsvorrichtung (13) nicht verteilen kann,
und einem dritten Übertragungszustand, wenn ein Fehler in der Hauptinformation, welche von der Informationsübertragungsvorrichtung (11) übertragen wird und welche durch die Informationsempfangsvorrichtung (13) empfangen wird, aufgetreten ist.

21. Programm, um es einem Computer zu ermöglichen, ein Steuerverfahren zum Steuern einer Informationsempfangsvorrichtung (13) auszuführen, welche mit einer Informationsübertragungsvorrichtung (11) verbunden werden kann, um Hauptinformation über ein Netzwerk (12) zu übertragen, wobei das Steuerverfahren umfasst:
einen Empfangsschritt zum Empfangen erster Steuerinformation, welche von der Informationsübertragungsvorrichtung (11) über das Netzwerk (12) übertragen wird, wobei die erste Steuerinformation eine Anfrage auf Übertragung eines Ergebnisses einer Bestimmung stellt, ob die Hauptinformation empfangen werden kann oder nicht;
einen Erzeugungsschritt zum Bestimmen, ob die Hauptinformation, welche von der Informationsübertragungsvorrichtung (11) übertragen wird, welche die erste Steuerinformation übertragen hat, empfangen wird, wenn die erste Steuerinformation durch die Verarbeitung im Empfangsschritt empfangen wird, und zum Erzeugen zweiter Steuerinformation, welche ein Ergebnis der Bestimmung zeigt; und
einen Übertragungsschritt zum Übertragen der zweiten Steuerinformation, welche durch die Verarbeitung im Erzeugungsschritt erzeugt wird, zur Informationsübertragungsvorrichtung (11) über das Netzwerk (12),
wobei die zweite Steuerinformation, welche durch die Übertragungseinrichtung übertragen wird, veranlasst, dass die Informationsübertragungsvorrichtung (11) ist in:
einem ersten Übertragungszustand, wenn die Hauptinformation durch die Informationsempfangsvorrichtung (13) normal empfangen wird,
einem zweiten Übertragungszustand, wenn die Informationsübertragungsvorrichtung (11) die Hauptinformation an die Intormationsempfangsvorrichtung (13) nicht verteilen kann,
und einem dritten Übertragungszustand, wenn ein Fehler in der Hauptinformation, welche von der Informationsübertragungsvorrichtung (11) übertragen wird und welche durch die Informationsempfangsvorrichtung (13) empfangen wird, aufgetreten ist.

## Revendications

1. Système de distribution d'informations comprenant un appareil de transmission d'informations (11) pour transmettre des informations principales et un appareil de réception d'informations (13) pour recevoir les informations principales transmises depuis l'appareil de transmission d'informations, l'appareil de réception d'informations (13) étant connecté à l'appareil de transmission d'informations (11) par l'intermédiaire d'un réseau (12), dans lequel
l'appareil de transmission d'informations (11) est configuré pour générer des premières informations de commande pour effectuer une demande à l'appareil de réception d'informations (13) de transmission d'un résultat d'une détermination quant à si l'appareil de réception d'informations (13) peut recevoir ou non les informations principales et pour transmettre les premières informations de commande générées par l'intermédiaire du réseau (12) ;
l'appareil de réception d'informations (13) est configuré, lors de la réception des premières informations de commande transmises depuis l'appareil de transmission d'informations (11) par l'intermédiaire du réseau (12), pour déterminer si recevoir ou non les informations principales transmises depuis l'appareil de transmission d'informations (11) qui a transmis les premières informations de commande reçues et pour générer des secondes informations de commande indiquant un résultat de la détermination de transmettre les secondes informations de commande générées à l'appareil de transmission d'informations (11) par l'intermédiaire du réseau (12) ; et
l'appareil de transmission d'informations (11) est configuré pour recevoir les secondes informations de commande transmises depuis l'appareil de réception d'informations (13) par l'intermédiaire du réseau (12), et pour empêcher la transmission des informations principales à l'appareil de réception d'informations (13) si les secondes informations de commande reçues indiquent un résultat de détermination selon lequel les informations principales ne sont pas reçues ou pour transmettre les informations principales à l'appareil de réception d'informations (13) par l'intermédiaire du réseau (12) si les secondes informations de commande indiquent un résultat de détermination selon lequel les informations principales sont reçues,
dans lequel l'appareil de transmission d'informations (11) est configuré, en réponse à la réception des secondes informations de commande, pour être dans :
un premier état de transmission lorsque les informations principales sont reçues normalement par l'appareil de réception d'informations (13),
un deuxième état de transmission lorsque l'appareil de transmission d'informations (11) ne peut pas distribuer les informations principales à l'appareil de réception d'informations (13),
et un troisième état de transmission lorsqu'une erreur s'est produite dans les informations principales transmises depuis l'appareil de transmission d'informations (11) et reçues par l'appareil de réception d'informations (13).

2. Procédé de distribution d'informations d'un système de distribution d'informations incluant un appareil de transmission d'informations (11) pour transmettre des informations principales et un appareil de réception d'informations (13) pour recevoir les informations principales transmises depuis l'appareil de transmission d'informations, l'appareil de réception d'informations (13) étant connecté à l'appareil de transmission d'informations (11) par l'intermédiaire d'un réseau (12), le procédé comprenant :
une première étape de transmission consistant à générer, dans l'appareil de transmission d'informations, des premières informations de commande pour effectuer une demande à l'appareil de réception d'informations (13) de transmission d'un résultat d'une détermination quant à si l'appareil de réception d'informations (13) peut recevoir ou non les informations principales et transmettre les premières informations de commande générées par l'intermédiaire du réseau (12) ;
une seconde étape de transmission consistant à déterminer si les informations principales transmises depuis l'appareil de transmission d'informations (11) qui a transmis les premières informations de commande reçues sont reçues ou non lorsque l'appareil de réception d'informations (13) reçoit par l'intermédiaire du réseau (12) les premières informations de commande transmises depuis l'appareil de transmission d'informations (11) par le traitement à la première étape de transmission, et générer des secondes informations de commande indiquant un résultat de la détermination de transmettre les secondes informations de commande générées à l'appareil de transmission d'informations (11) par l'intermédiaire du réseau (12) ; et
une étape de commande de transmission consistant à recevoir dans l'appareil de transmission d'informations (11) par l'intermédiaire du réseau (12) les secondes informations de commande transmises depuis l'appareil de réception d'informations (13) par le traitement à la seconde étape de transmission, et empêcher la transmission des informations principales à l'appareil de réception d'informations (13) si les secondes informations de commande reçues indiquent un résultat de détermination selon lequel les informations principales ne sont pas reçues ou permettre que les informations principales soient transmises à l'appareil de réception d'informations (13) par l'intermédiaire du réseau (12) si les secondes informations de commande indiquent un résultat de détermination selon lequel les informations principales sont reçues,
dans lequel les secondes informations de commande reçues amènent l'appareil de transmission d'informations (11) à être dans :
un premier état de transmission lorsque les informations principales sont reçues normalement par l'appareil de réception d'informations (13),
un deuxième état de transmission lorsque l'appareil de transmission d'informations (11) ne peut pas distribuer les informations principales à l'appareil de réception d'informations (13),
et un troisième état de transmission lorsqu'une erreur s'est produite dans les informations principales transmises depuis l'appareil de transmission d'informations (11) et reçues par l'appareil de réception d'informations (13).

3. Appareil de transmission d'informations (11) pouvant être connecté à un appareil de réception d'informations (13) par l'intermédiaire d'un réseau (12), comprenant :
des moyens de génération pour générer des premières informations de commande pour effectuer une demande à l'appareil de réception d'informations (13) de transmission d'un résultat d'une détermination quant à si l'appareil de réception d'informations (13) peut recevoir ou non des informations principales ;
des moyens de transmission pour transmettre les premières informations de commande générées par les moyens de génération à l'appareil de réception d'informations (13) par l'intermédiaire du réseau (12) ;
des moyens de réception pour recevoir, par l'intermédiaire du réseau (12), des secondes informations de commande transmises depuis l'appareil de réception d'informations (13) en réponse aux premières informations de commande transmises par les moyens de transmission, les secondes informations de commande indiquant un résultat d'une détermination quant à si l'appareil de réception d'informations (13) reçoit ou non les informations principales ; et
des moyens de commande de transmission pour empêcher les moyens de transmission de transmettre les informations principales à l'appareil de réception d'informations (13) si les secondes informations de commande reçues par les moyens de réception indiquent un résultat de détermination selon lequel l'appareil de réception d'informations (13) ne reçoit pas les informations principales ou permettre aux moyens de transmission de transmettre les informations principales à l'appareil de réception d'informations (13) par l'intermédiaire du réseau (12) si les secondes informations de commande indiquent un résultat de détermination selon lequel l'appareil de réception d'informations (13) reçoit les informations principales,
dans lequel l'appareil de transmission d'informations (11) est configuré, en réponse à la réception des secondes informations de commande, pour être dans :
un premier état de transmission lorsque les informations principales sont reçues normalement par l'appareil de réception d'informations (13),
un deuxième état de transmission lorsque l'appareil de transmission d'informations (11) ne peut pas distribuer les informations principales à l'appareil de réception d'informations (13),
et un troisième état de transmission lorsqu'une erreur s'est produite dans les informations principales transmises depuis l'appareil de transmission d'informations (11) et reçues par l'appareil de réception d'informations (13).

4. Appareil de transmission d'informations (11) selon la revendication 3, dans lequel les moyens de transmission sont configurés pour transmettre les premières informations de commande avec les informations principales lorsque les moyens de transmission transmettent les informations principales.

5. Appareil de transmission d'informations (11) selon la revendication 3, dans lequel les moyens de transmission sont configurés pour transmettre les premières informations de commande à un intervalle de temps prédéterminé.

6. Appareil de transmission d'informations (11) selon la revendication 3, dans lequel les premières et secondes informations de commande sont des informations de paquet RTCP.

7. Appareil de transmission d'informations (11) selon la revendication 3, dans lequel les secondes informations de commande comprennent un signal d'acceptation ou un signal de rejet, le signal d'acceptation comprenant un signal indiquant un état de l'appareil de réception d'informations (13) où un signal normal est reçu ou un signal indiquant un état de l'appareil de réception d'informations (13) où une erreur s'est produite dans le signal reçu.

8. Appareil de transmission d'informations (11) selon la revendication 3, dans lequel si les secondes informations de commande sont des informations indiquant un état de réception au niveau de l'appareil de réception d'informations (13), les moyens de commande de transmission sont configurés pour déterminer que les secondes informations de commande indiquent un résultat de détermination selon lequel l'appareil de réception d'informations (13) reçoit les informations principales et pour permettre aux moyens de transmission de transmettre les informations principales à l'appareil de réception d'informations (13) par l'intermédiaire du réseau (12).

9. Appareil de transmission d'informations (11) selon la revendication 8, dans lequel l'état de réception est représenté par un état d'occurrence d'une erreur dans les informations principales reçues par l'appareil de réception d'informations (13).

10. Appareil de transmission d'informations (11) selon la revendication 3, dans lequel l'appareil de transmission d'informations (11) est configuré pour être dans un état de non transmission lorsque l'appareil de transmission d'informations (11) ne transmet pas un signal.

11. Procédé de transmission d'informations d'un appareil de transmission d'informations (11) pouvant être connecté à un appareil de réception d'informations (13) par l'intermédiaire d'un réseau (12), le procédé comprenant :
une étape de génération consistant à générer des premières informations de commande pour effectuer une demande à l'appareil de réception d'informations (13) de transmission d'un résultat d'une détermination quant à si l'appareil de réception d'informations (13) peut recevoir ou non des informations principales ;
une étape de transmission consistant à transmettre les premières informations de commande générées par le traitement à l'étape de génération à l'appareil de réception d'informations (13) par l'intermédiaire du réseau (12) ;
une étape de réception consistant à recevoir, par l'intermédiaire du réseau (12), des secondes informations de commande transmises depuis l'appareil de réception d'informations (13) en réponse aux premières informations de commande transmises par le traitement à l'étape de transmission, les secondes informations de commande indiquant un résultat d'une détermination quant à si l'appareil de réception d'informations (13) reçoit ou non les informations principales ; et
une étape de commande de transmission consistant à empêcher que les informations principales soient transmises à l'appareil de réception d'informations (13) si les secondes informations de commande reçues par le traitement à l'étape de réception indiquent un résultat de détermination selon lequel l'appareil de réception d'informations (13) ne reçoit pas les informations principales ou permettre que les informations principales soient transmises à l'appareil de réception d'informations (13) par l'intermédiaire du réseau (12) si les secondes informations de commande indiquent un résultat de détermination selon lequel l'appareil de réception d'informations (13) reçoit les informations principales,
dans lequel les secondes informations de commande reçues amènent l'appareil de transmission d'informations (11) à être dans :
un premier état de transmission lorsque les informations principales sont reçues normalement par l'appareil de réception d'informations (13),
un deuxième état de transmission lorsque l'appareil de transmission d'informations (11) ne peut pas distribuer les informations principales à l'appareil de réception d'informations (13),
et un troisième état de transmission lorsqu'une erreur s'est produite dans les informations principales transmises depuis l'appareil de transmission d'informations (11) et reçues par l'appareil de réception d'informations (13).

12. Support d'enregistrement ayant un programme enregistré dessus, le programme permettant à un ordinateur d'exécuter un procédé de commande pour commander un appareil de transmission d'informations (11) pouvant être connecté à un appareil de réception d'informations (13) par l'intermédiaire d'un réseau (12), le procédé de commande comprenant :
une étape de génération consistant à générer des premières informations de commande pour effectuer une demande à l'appareil de réception d'informations (13) de transmission d'un résultat d'une détermination quant à si l'appareil de réception d'informations (13) peut recevoir ou non des informations principales ;
une étape de transmission consistant à transmettre les premières informations de commande générées par le traitement à l'étape de génération à l'appareil de réception d'informations (13) par l'intermédiaire du réseau (12) ;
une étape de réception consistant à recevoir, par l'intermédiaire du réseau (12), des secondes informations de commande transmises depuis l'appareil de réception d'informations (13) en réponse aux premières informations de commande transmises par le traitement à l'étape de transmission, les secondes informations de commande indiquant un résultat d'une détermination quant à si l'appareil de réception d'informations (13) reçoit ou non les informations principales ; et
une étape de commande de transmission consistant à empêcher que les informations principales soient transmises à l'appareil de réception d'informations (13) si les secondes informations de commande reçues par le traitement à l'étape de réception indiquent un résultat de détermination selon lequel l'appareil de réception d'informations (13) ne reçoit pas les informations principales ou permettre que les informations principales soient transmises à l'appareil de réception d'informations (13) par l'intermédiaire du réseau (12) si les secondes informations de commande indiquent un résultat de détermination selon lequel l'appareil de réception d'informations (13) reçoit les informations principales,
dans lequel les secondes informations de commande reçues amènent l'appareil de transmission d'informations (11) à être dans :
un premier état de transmission lorsque les informations principales sont reçues normalement par l'appareil de réception d'informations (13),
un deuxième état de transmission lorsque l'appareil de transmission d'informations (11) ne peut pas distribuer les informations principales à l'appareil de réception d'informations (13),
et un troisième état de transmission lorsqu'une erreur s'est produite dans les informations principales transmises depuis l'appareil de transmission d'informations (11) et reçues par l'appareil de réception d'informations (13).

13. Programme pour permettre à un ordinateur d'exécuter un procédé de commande pour commander un appareil de transmission d'informations (11) pouvant être connecté à un appareil de réception d'informations (13) par l'intermédiaire d'un réseau (12), le procédé de commande comprenant :
une étape de génération consistant à générer des premières informations de commande pour effectuer une demande à l'appareil de réception d'informations (13) de transmission d'un résultat d'une détermination quant à si l'appareil de réception d'informations (13) peut recevoir ou non des informations principales ;
une étape de transmission consistant à transmettre les premières informations de commande générées par le traitement à l'étape de génération à l'appareil de réception d'informations (13) par l'intermédiaire du réseau (12) ;
une étape de réception consistant à recevoir, par l'intermédiaire du réseau (12), des secondes informations de commande transmises depuis l'appareil de réception d'informations (13) en réponse aux premières informations de commande transmises par le traitement à l'étape de transmission, les secondes informations de commande indiquant un résultat d'une détermination quant à si l'appareil de réception d'informations (13) reçoit ou non les informations principales ; et
une étape de commande de transmission consistant à empêcher que les informations principales soient transmises à l'appareil de réception d'informations (13) si les secondes informations de commande reçues par le traitement à l'étape de réception indiquent un résultat de détermination selon lequel l'appareil de réception d'informations (13) ne reçoit pas les informations principales ou permettre que les informations principales soient transmises à l'appareil de réception d'informations (13) par l'intermédiaire du réseau (12) si les secondes informations de commande indiquent un résultat de détermination selon lequel l'appareil de réception d'informations (13) reçoit les informations principales,
dans lequel les secondes informations de commande reçues amènent l'appareil de transmission d'informations (11) à être dans :
un premier état de transmission lorsque les informations principales sont reçues normalement par l'appareil de réception d'informations (13),
un deuxième état de transmission lorsque l'appareil de transmission d'informations (11) ne peut pas distribuer les informations principales à l'appareil de réception d'informations (13),
et un troisième état de transmission lorsqu'une erreur s'est produite dans les informations principales transmises depuis l'appareil de transmission d'informations (11) et reçues par l'appareil de réception d'informations (13).

14. Appareil de réception d'informations (13) pouvant être connecté à un appareil de transmission d'informations (11) pour transmettre des informations principales par l'intermédiaire d'un réseau (12), comprenant :
des moyens de réception pour recevoir des premières informations de commande transmises depuis l'appareil de transmission d'informations (11) par l'intermédiaire du réseau (12), les premières informations de commande effectuant une demande de transmission d'un résultat d'une détermination quant à si les informations principales peuvent être reçues ou non ;
des moyens de génération pour déterminer si les informations principales transmises depuis l'appareil de transmission d'informations (11) qui a transmis les premières informations de commande sont reçues ou non lorsque les premières informations de commande sont reçues par les moyens de réception et générer des secondes informations de commande indiquant un résultat de la détermination ; et
des moyens de transmission pour transmettre les secondes informations de commande générées par les moyens de génération à l'appareil de transmission d'informations (11) par l'intermédiaire du réseau (12),
dans lequel les secondes informations de commande transmises par les moyens de transmission amènent l'appareil de transmission d'informations (11) à être dans :
un premier état de transmission lorsque les informations principales sont reçues normalement par l'appareil de réception d'informations (13),
un deuxième état de transmission lorsque l'appareil de transmission d'informations (11) ne peut pas distribuer les informations principales à l'appareil de réception d'informations (13),
et un troisième état de transmission lorsqu'une erreur s'est produite dans les informations principales transmises depuis l'appareil de transmission d'informations (11) et reçues par l'appareil de réception d'informations (13).

15. Appareil de réception d'informations (13) selon la revendication 14, dans lequel :
l'appareil de réception d'informations (13) peut être connecté à un premier appareil de transmission d'informations (11) et à un second appareil de transmission d'informations (11) par l'intermédiaire du réseau (12) ;
les moyens de génération sont configurés pour déterminer que les informations principales transmises depuis le second appareil de transmission d'informations (11) ne sont pas reçues lorsque les premières informations de commande sont reçues depuis le second appareil de transmission d'informations (11) alors que les informations principales transmises depuis le premier appareil de transmission d'informations (11) sont reçues par les moyens de réception, et pour générer des secondes informations de commande indiquant un résultat de la détermination ; et
les moyens de transmission sont configurés pour transmettre les secondes informations générées par les moyens de génération au second appareil de transmission d'informations (11) par l'intermédiaire du réseau (12).

16. Appareil de réception d'informations (13) selon la revendication 14, dans lequel les premières et secondes informations de commande sont des informations de paquet RTCP.

17. Appareil de réception d'informations (13) selon la revendication 14, dans lequel les moyens de génération sont configurés pour générer des informations indiquant un état de réception au niveau de l'appareil de réception d'informations (13) en tant que secondes informations de commande lorsqu'une détermination est effectuée selon laquelle les informations principales sont reçues.

18. Appareil de réception d'informations (13) selon la revendication 17, dans lequel l'état de réception est représenté par un état d'occurrence d'une erreur dans les informations principales reçues par les moyens de réception.

19. Procédé de réception d'informations d'un appareil de réception d'informations (13) pouvant être connecté à un appareil de transmission d'informations (11) pour transmettre des informations principales par l'intermédiaire d'un réseau (12), comprenant :
une étape de réception consistant à recevoir des premières informations de commande transmises depuis l'appareil de transmission d'informations (11) par l'intermédiaire du réseau (12), les premières informations de commande effectuant une demande de transmission d'un résultat d'une détermination quant à si les informations principales peuvent être reçues ou non ;
une étape de génération consistant à déterminer si les informations principales transmises depuis l'appareil de transmission d'informations (11) qui a transmis les premières informations de commande sont reçues ou non lorsque les premières informations de commande sont reçues par le traitement à l'étape de réception et générer des secondes informations de commande indiquant un résultat de la détermination ; et
une étape de transmission consistant à transmettre les secondes informations de commande générées par le traitement à l'étape de génération à l'appareil de transmission d'informations (11) par l'intermédiaire du réseau (12),
dans lequel les secondes informations de commande transmises par les moyens de transmission amènent l'appareil de transmission d'informations (11) à être dans :
un premier état de transmission lorsque les informations principales sont reçues normalement par l'appareil de réception d'informations (13),
un deuxième état de transmission lorsque l'appareil de transmission d'informations (11) ne peut pas distribuer les informations principales à l'appareil de réception d'informations (13),
et un troisième état de transmission lorsqu'une erreur s'est produite dans les informations principales transmises depuis l'appareil de transmission d'informations (11) et reçues par l'appareil de réception d'informations (13).

20. Support d'enregistrement ayant un programme enregistré dessus, le programme permettant à un ordinateur d'exécuter un procédé de commande pour commander un appareil de réception d'informations (13) pouvant être connecté à un appareil de transmission d'informations (11) pour transmettre des informations principales par l'intermédiaire d'un réseau (12), le procédé de commande comprenant :
une étape de réception consistant à recevoir des premières informations de commande transmises depuis l'appareil de transmission d'informations (11) par l'intermédiaire du réseau (12), les premières informations de commande effectuant une demande de transmission d'un résultat d'une détermination quant à si les informations principales peuvent être reçues ou non ;
une étape de génération consistant à déterminer si les informations principales transmises depuis l'appareil de transmission d'informations (11) qui a transmis les premières informations de commande sont reçues ou non lorsque les premières informations de commande sont reçues par le traitement à l'étape de réception et générer des secondes informations de commande indiquant un résultat de la détermination ; et
une étape de transmission consistant à transmettre les secondes informations de commande générées par le traitement à l'étape de génération à l'appareil de transmission d'informations (11) par l'intermédiaire du réseau (12),
dans lequel les secondes informations de commande transmises par les moyens de transmission amènent l'appareil de transmission d'informations (11) à être dans :
un premier état de transmission lorsque les informations principales sont reçues normalement par l'appareil de réception d'informations (13),
un deuxième état de transmission lorsque l'appareil de transmission d'informations (11) ne peut pas distribuer les informations principales à l'appareil de réception d'informations (13),
et un troisième état de transmission lorsqu'une erreur s'est produite dans les informations principales transmises depuis l'appareil de transmission d'informations (11) et reçues par l'appareil de réception d'informations (13).

21. Programme pour permettre à un ordinateur d'exécuter un procédé de commande pour commander un appareil de réception d'informations (13) pouvant être connecté à un appareil de transmission d'informations (11) pour transmettre des informations principales par l'intermédiaire d'un réseau (12), le procédé de commande comprenant :
une étape de réception consistant à recevoir des premières informations de commande transmises depuis l'appareil de transmission d'informations (11) par l'intermédiaire du réseau (12), les premières informations de commande effectuant une demande de transmission d'un résultat d'une détermination quant à si les informations principales peuvent être reçues ou non ;
une étape de génération consistant à déterminer si les informations principales transmises depuis l'appareil de transmission d'informations (11) qui a transmis les premières informations de commande sont reçues ou non lorsque les premières informations de commande sont reçues par le traitement à l'étape de réception et générer des secondes informations de commande indiquant un résultat de la détermination ; et
une étape de transmission consistant à transmettre les secondes informations de commande générées par le traitement à l'étape de génération à l'appareil de transmission d'informations (11) par l'intermédiaire du réseau (12),
dans lequel les secondes informations de commande transmises par les moyens de transmission amènent l'appareil de transmission d'informations (11) à être dans :
un premier état de transmission lorsque les informations principales sont reçues normalement par l'appareil de réception d'informations (13),
un deuxième état de transmission lorsque l'appareil de transmission d'informations (11) ne peut pas distribuer les informations principales à l'appareil de réception d'informations (13),
et un troisième état de transmission lorsqu'une erreur s'est produite dans les informations principales transmises depuis l'appareil de transmission d'informations (11) et reçues par l'appareil de réception d'informations (13).
